# EUROPEAN PATENT SPECIFICATION

(11) **EP 0 614 414 B1**
(45) Date of publication and mention of the grant of the patent: **03.12.1997**
(21) Application number: 93922471.3
(22) Date of filing: 30.09.1993
(51) Int. Cl.: B29C 53/64, B29C 53/80, B29L 23/00, B05C 17/02

(54) **APPARATUS AND PROCESS FOR THE MANUFACTURE OF PAINT ROLLERS**
VORRICHTUNG UND VERFAHREN ZUR HERSTELLUNG VON FARBROLLERN
APPAREIL ET PROCEDE DE FABRICATION DE ROULEAUX A PEINDRE

(30) Priority: 01.10.1992 BR 9203894
(43) Date of publication of application: 14.09.1994
(73) Proprietor: PINCEIS TIGRE S/A, 06278-900 Sao Paulo, SP (BR)
(72) Inventor: BRESSIANI, Ricardo, Augusto, 05467-020 Sao Paulo, SP (BR)
(74) Representative: Geyer, Werner, Dr.-Ing.
(86) International application number: BR9300035
(87) International publication number: WO9407679

(56) References cited:
- DE-A- 3 840 788
- GB-A- 844 536
- US-A- 2 731 067
- US-A- 2 812 007
- US-A- 3 032 461
- US-A- 4 385 480

## Description

### Field of the invention

The present invention refers to an apparatus and a process for the manufacture of paint rollers, which provide, automatically, the covering of a cylindrical tubular rod with a fibrous material that externally carries a layer or web made of animal, vegetal of synthetic fibers.

### Background of the Invention

In one of the known processes for the manufacture of paint rollers (DE-A-35 44 640), the feeding, conducting and removing operations of the processed material are made through stages, requiring the paralyzation of the apparatus whenever a matrix tubular rod, presenting a length corresponding to a plurality of rollers, passes through the rolling stage of the manufacturing process, and when, after it has been removed from said apparatus, a new matrix rod is positioned, in order to be covered by said apparatus.

This process, apart from not being continuous, requires a great deal of interference from the operators, thus becoming very slow. Another inconvenience refers to the inevitable loss of the covering material at the ends of each rod, since the beginning and the end of the winding should occur with the strip of the covering material being slightly projected beyond the end limits of the rod.

US-A-2,812,007 describes a process for the manufacture of paint rollers, in which a semi-automatic apparatus is used, which operates continuously but requires the matrix rods to be fed and removed manually and a tensioning clamp in a rod cover material strip feed to be continuously adjusted by an operator in order to control the strip width where it is laid on the core to ensure the facing margins of adjacent layers of the spirally wound covering strip to be in perfect abutment so that there are no gaps in the coverage of the core and be no overlapping of adjacent layers. Although the matrix rods are continuously covered in a relatively short time and without interruption of the rod covering process during operation of said apparatus, a relatively great deal of interference by the operator is still required.

A more recent process for the manufacture of paint rollers (published Brazilian patent application No. PI 8602712), presents a semi-automatic apparatus of continuous operation, in which the matrix rods are manually fed and removed from said apparatus, but without interrupting the rod covering process during the working period of said apparatus. In this apparatus, a system for supporting a central guide of the rod and having carriages is mounted onto a basic structure, in which a first carriage carries each matrix rod through the central guide support, towards a fixed heat source, which thermally prepares the surface of said rod, in order to, immediately after the rod has left the exit of said source, receive and heat fuse an adequate cover on the rod surface. At this stage, the operator manually leads a second carriage towards the free end of the rod being covered, in order to engage and conduct said rod until its covering is over.

Simultaneously to the engagement of the rod being covered with the second carriage, the opposite end of said rod is released from the first carriage, which has already reached its maximum operative movement of the basic structure, and it is now manually taken to its initial position, so as to be engaged with a new matrix rod.

In said apparatus, the feeding of the covering material occurs continuously, while the carriages are moving, since the feeding speed of the covering material towards each matrix rod is a function of the rotational speed of the latter around a longitudinal axis, said rotation being governed by the translational speed of the carriages.

For the removal of a thoroughly covered rod from the apparatus, an operator cuts the covering material at the portion of engagement between the already covered matrix rod and a subsequent matrix rod that is beginning to be covered. The manual engagement between the rods occurs after the engagement, with the second carriage, of an anterior rod that was being covered.

Although in this process the covering of matrix rods is achieved in a short time and with no interruption during a working day, the feeding and removing operations of said rods are still made manually.

Moreover, the loss of covering material is also significant, due to the fact that said material is manually cut, without interrupting the motion of the present apparatus.

In either of said processes, the failures that may occur in a processing stage can result in burns of the material to be covered and even of the operator, due to lack of safety.

### Disclosure of the Invention

Thus, it is a first object of the present invention to present an apparatus and a process for the manufacture of paint rollers, in which matrix rods are automatically and individually fed, submitted to covering and removed from said apparatus, without the interference of operators.

A second object of the present invention is to present an apparatus and a process for the manufacture of paint rollers, in which the production of the covered matrix rods is fast and continuous, the covering being homogeneously applied throughout the useful surface of said matrix rods.

A third object of the present invention is to present an apparatus and a process for the manufacture of paint rollers, which minimize the loss of covering material and of the covered product.

A fourth object of the present invention is to provide said apparatus with a safety system to protect the operator and the material being processed against burns, in case of failures in the operation of the apparatus.

These objectives are attained through an apparatus for the manufacture of paint rollers of the type which allows the helical winding and fixation of a covering strip around a cylindrical matrix rod, said apparatus comprising: a basic elongated structure; first and second movable supports, which are movable on the basic structure, between a resting inoperative position and a maximum advance operative position, and which include, respectively, first and second gripping means, which are engageable, without any relative rotational movement, with an adjacent end of the matrix rod and with a mechanism to rotatively actuate said matrix rod; sequentially, on the basic structure, there is provided a first fixed support, after the maximum advance operative position of said first movable support; a heat source, which superficially fuses the adjacent portion of said matrix rod, a covering strip feeding mechanism and a cutting mechanism that cuts said covering strip between two consecutive matrix rods; a movable support impelling mechanism; and first and second engaging means, which engage respectively and selectively said first and second movable supports with the movable support impelling mechanism, so as to make each movable support move from the resting inoperative position towards the maximum advance operative position, wherein in said apparatus:
- the first and second movable supports carry, respectively thereon, the first and second gripping means, which are movable between a retracted inoperative position and an advanced operative position, and first and second means for impelling said gripping means, moving the respective gripping means between said retracted inoperative position and said advanced operative position;
- a rod feeding device, including a first rod positioning means, which positions a matrix rod in front of the first movable support, in its resting inoperative position, aligned longitudinally with the first and second gripping means;
- an eleventh sensor, provided in order to detect the presence of a matrix rod at the positioning means, and to activate the first engaging means, by engaging the first movable support with the movable support impelling mechanism;
- a first sensor means, provided at the first movable support, in order to detect the coupling between the first gripping means and the adjacent end of the matrix rod, on the first positioning means, and to instruct the first impelling means of the gripping means to move to its advanced operative position;
- a third sensor, mounted to either one of the first and second movable supports, in order to detect the coupling of the free end of a non-covered matrix rod to one of the parts defined by the free end of another consecutive matrix rod being covered and by the second gripping means, and to interrupt the advance of the first gripping means at its advanced operative position, each matrix rod having its ends provided with coupling means, in order to allow the engagement, without any relative axial and rotational motions, with the free end of another consecutive matrix rod;
- the cutting mechanism is provided with cutting means, mounted to the basic structure, so that it is movable between a retracted inoperative position and an advanced operative position relative to the covered matrix rod, in order to cut the covering strip at the junction region of two consecutive matrix rods, according to a plane orthogonal to the axis of said matrix rods, the movement of said cutting means being achievable through impelling means, mounted between the basic structure and the cutting means;
- an eighth sensor, provided on the basic structure, in order to detect the passage of the free end of the non-covered matrix rod through the covering strip feeding mechanism, as a function of the relative positioning of either one of the first and second movable supports and the basic structure, and to command the activation of the impelling means, in order to make the cutting element advance to its operative position;
- a ninth sensor, provided at the cutting mechanism, in order to detect the advanced operative position of the cutting means, and to command the return of the impelling means to the retracted inoperative position of the cutting means;
- a first movable support advance impelling means, mounted between the basic structure and the second movable support, in order to move the latter to its maximum advance operative position, upon the disengagement of said second movable support from the movable support impelling means;
- an eighteenth sensor, provided in at least one of the parts defined by the basic structure and the second movable support, in order to detect the passage of the second movable support at a first advanced operative position, close to the maximum advance operative position, and to cause the disengagement of the second gripping means from the adjacent end of a covered matrix rod, upon the return of the second gripping means to the retracted inoperative position, thus allowing the matrix rod to be removed from said apparatus;
- second and third movable support advance impelling means, mounted between the basic structure and the respective first and second movable supports, in order to make the latter return to their respective resting inoperative position, after they have achieved the respective maximum advance operative position;
- a twenty-first sensor, mounted onto the basic structure, in order to detect the arrival of the second movable support to the maximum advance operative position, and to activate the third movable support advance impelling means;
- a twelfth sensor, provided on the basic structure, in order to detect the presence of the second movable support, at the resting inoperative position, and to command the advance of the second gripping means to the maximum advance operative position, as well as the engagement of the second engaging means with the movable support impelling mechanism;
- a second sensor, provided on the second movable support, in order to detect the coupling between the second gripping means and the already covered adjacent end of a matrix rod, and between the first engaging means and the movable support impelling mechanism;
- a fifth sensor, provided on the first movable support, in order to detect the disengagement of the first gripping means from the non-covered adjacent end of the matrix rod, to command the return of the first gripping means to the retracted inoperative position, and to activate the second movable support advance impelling means;
- a fifteenth sensor, provided at one of the parts defined by the basic structure and the first movable support, in order to detect the return of the latter to the resting inoperative position, and to instruct the first rod positioning means to move to its operative position, for supporting a new matrix rod in front of the first movable support.

This apparatus processes the covering of tubular matrix rods through the following stages:
a- positioning a first matrix rod in a covering operative longitudinal direction on the rod covering apparatus;
b- detecting the positioning of the first matrix rod at said operative longitudinal direction and submitting said matrix rod to an axial movement in a covering operative direction, at a first constant speed and a predetermined rotation;
c- detecting the beginning of the axial movement and submitting the matrix rod to a first constant axial movement, during a certain time in the operation of said axial and rotational movements;
d- detecting the arrival of a first matrix rod end, which faces the covering operative direction, at a determined position of its axial movement, and superficially heating the matrix rod, from said first end, while said matrix rod is moving at said first constant speed after the acceleration;
e- initiating the continuous covering of the matrix rod under rotation, from said first end, after the superficial heating thereof;
f- positioning a second matrix rod at the covering operative longitudinal direction, when the first matrix rod reaches a position in its axial movement, sufficient to allow said positioning of the second matrix rod on the covering apparatus;
g- submitting the second matrix rod to stage "b" described above;
h- detecting the beginning of the axial movement of the second matrix rod and submitting the same to the first acceleration, while the axial movement is taking place, said acceleration being sufficient and necessary for engaging the first rod end with a second end of the first matrix rod being covered;
i- submitting the second matrix rod to stages "d" and "e" described above, whilst maintaining its first end engaged with the second end of the first matrix rod;
j- cutting the covering strip, at the region of engagement between the first and second matrix rods, according to a plane orthogonal to the covering operative direction;
k- detecting the end of the cutting operation of the covering strip, and submitting the first matrix rod to a second axial constant acceleration, in the operative direction of movement and during a certain time, enough to allow the axial separation of the adjacent ends of two consecutive matrix rods;
l- detecting a position of the first matrix rod axially spaced from the second matrix rod, and removing the first covered matrix rod from the covering apparatus;
m- repeating stages "j" up to "l" for the subsequent rods;

### Brief Description of the Drawings

The invention will be described below, with reference to the attached drawings, in which:
Fig. 1 is a partial sectional plan view of the apparatus for the manufacture of paint rollers of the present invention;
Fig. 2 is a partial sectional lateral view of the same apparatus illustrated in figure 1;
Fig. 3 shows an enlarged detail of the rod gripping mechanism, according to an end view of the apparatus;
Figs. 4 and 4a illustrate, in an enlarged scale, an axial end view and an upper plan view of one of the rod guiding supports, respectively;
Fig. 5 shows a perspective view of an enlarged detail of the rod covering mechanism;
Fig. 6 is an enlarged end axial view of the fabric cutting mechanism between two consecutive rods;
Fig. 7 is an enlarged end axial view of the rod removing mechanism;
Figs. 8, 8a and 8b show, respectively, a cylindrical stem, a matrix rod and matrix rod/cylindrical stem assembly, according to an enlarged lateral view;
Fig. 9 is an enlarged simplified lateral view of the second carriage of the present apparatus, placed at an operative position and illustrating its movable parts;
Figs. 10 and 11 illustrate, respectively, enlarged partial sectional front and lateral views of one of the carriages; and
Figs. 12 and 13 show, respectively, upper plan and lateral views of the covered rod cutting mechanism of the present apparatus.

### Best Mode of Carrying Out the Invention

According to the illustrated figures, the apparatus in question comprises a basic elongated structure 1, defined by a pair of horizontal upper beams 2, supported by pairs of vertical columns 3, which are interconnected by a pair of horizontal lower beams 4, said basic structure 1 presenting a length sufficient to receive thereon at least two longitudinally aligned tubular matrix rods 10, each defining the core of a plurality of paint rollers.

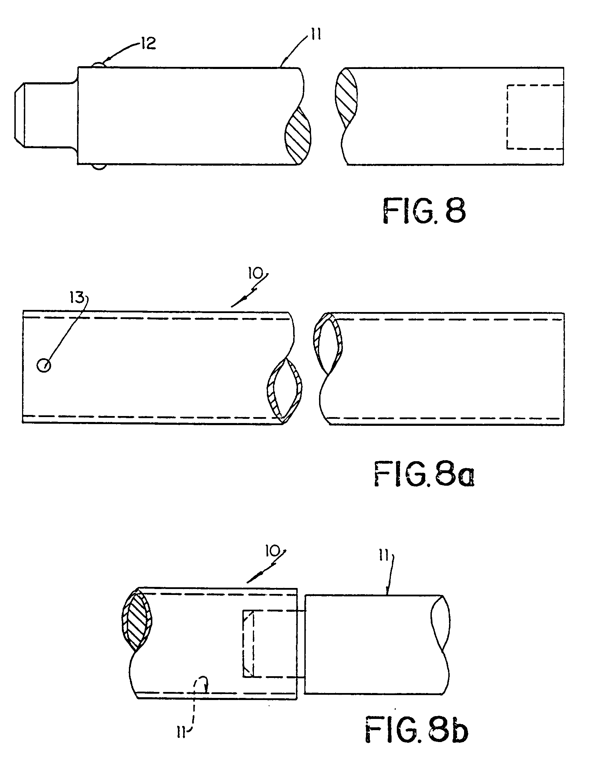

In the constructive form presented in figures 8, 8a and 8b, the matrix rods 10 are defined by a heat-deformable tubular housing, which are preferably made of plastic and which are mounted around respective metallic stems 11, preferably made of aluminium, presenting a male-female fitting and having one end thereof provided with a male fitting and retracting pins 12, that are diametrically opposed to each other, in order to fit into respective throughbores 13, provided on the corresponding matrix rod, onto which the covering material will be applied. The retracting pins/throughbores assembly acts jointly, so as to avoid relative movements between each tubular matrix rod 10 and metallic stem 11, during the covering operation.

On the other hand, said pins 12, on being retractable, permit the dismounting of the assembly after the covering of the matrix rod 10 has finished, in order to allow the mounting of a new matrix rod 10 to a respective metallic stem 11.

The basic structure 1 further includes, preferably, three rod guiding assemblies 20, in the form of fixed supports, one of which being located before the heating and covering point of the matrix rods 10, while another assembly is located just after said covering point, whereas the third one is located after the engaging point of two matrix rods 10, in order to direct only the matrix rod 10 which is being pulled by the second carriage.

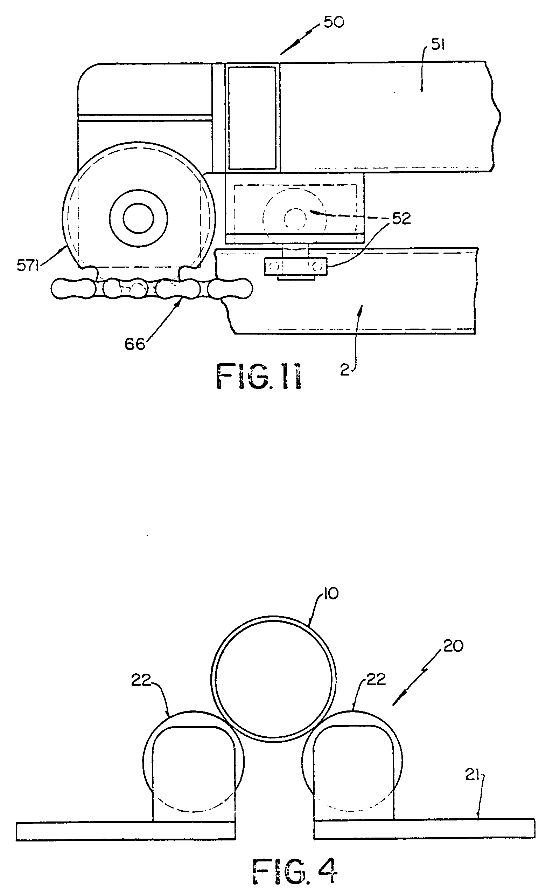

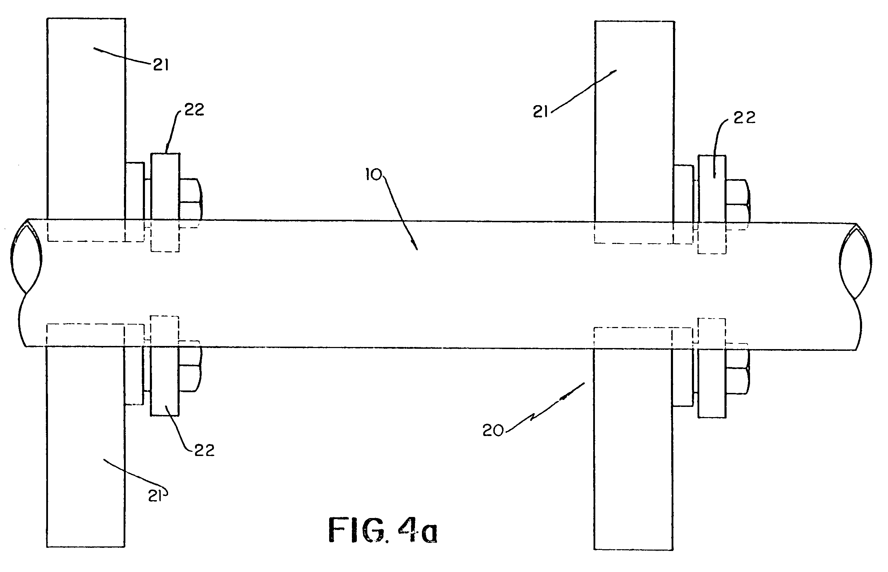

Each guiding rod assembly 20 (see figs. 4 and 4a) comprises a transversal upper beam 21, interconnecting said two longitudinal upper beams 2 and supporting a respective pair of rollers 22, which define a kind of "V" shaped cradle, in order to support the matrix rod 10 that is being longitudinally moved thereon.

It should be understood herein that the two pairs of rollers 22, which are located after the covering point of the matrix rods 10, are arranged in order to define more opened cradles, thus compensanting the increase of the matrix rod diameters due to the incorporation of the covering.

Onto both end portions of the basic structure 1, there are mounted respective first and second movable supports, in the form of carriages 40, 50, which can be moved on the end portions of the longitudinal upper beams 2, between the respective retractive inoperative and advanced operative positions.

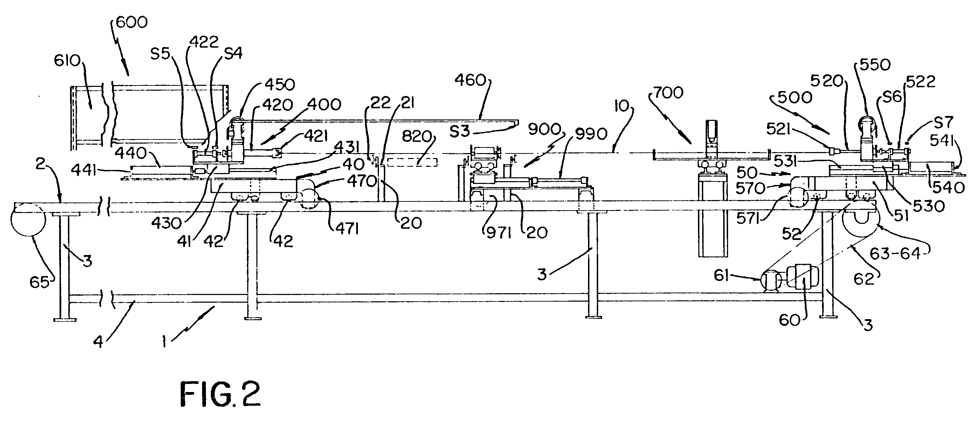

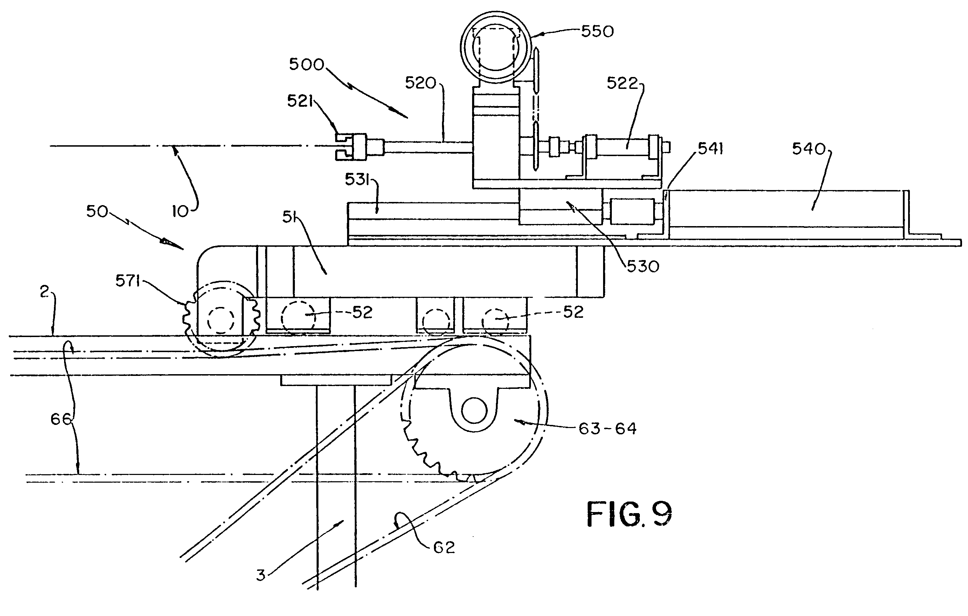

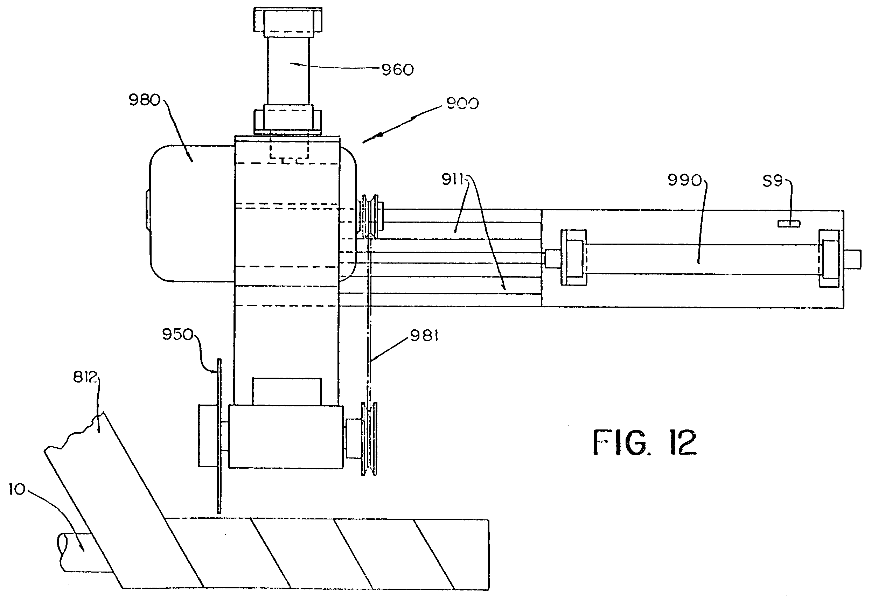

As better illustrated in figures 2, 9, 10 and 11, each carriage 40, 50 includes a supporting platform 41, 51, which is preferably flat, continuous and parallel to the plane of the longitudinal upper beam 2, mounted on a plurality of rollers 42, 52, which slide on a guide-rail defined by the upper edge of the longitudinal upper beams 2, wherein in the preferred constructive disposition, each carriage 40, 50 presents two pairs of rollers, which slide on the upper side of a first longitudinal upper beam 2, a pair of actuating rollers, each being against a respective lateral wall of said first longitudinal upper beam 2, and another roller acting on the upper face of a second longitudinal upper beam 2.

The distribution of said rollers 42, 52 is made around the gravitation center of the carriage, in order to maintain said carriage in a stable balance on the basic structure 1, during all stages of the covering process of the matrix rods 10.

As described below, each carriage 40, 50 is conducted in an operative direction of movement, longitudinal to the structure 1, by action of a first moto-reducer 60 (fig. 2), which carries a driving toothed wheel 61, which actuates, through a first auxiliary chain 62, a first driven toothed wheel 63, whose shaft, which is transversal to the structure 1, supports a first driving toothed wheel 64, disposed medianly to the longitudinal upper beams 2, at an end of the structure 1 and connected to a second driven toothed wheel 65, disposed at the opposite end of the structure 1, through a movable support driving mechanism, in the form of a longitudinal drive chain 66.

Said drive chain 66 imparts the same constant translational speed to the first and second carriages 40, 50. The energization of the moto-reducer 60 is controlled through driving controlling means provided in a control panel, which is not illustrated. Once energized, said moto-reducer 60 is kept operating during the whole working day, being only interrupted in case of energy or operational failure in the components of the present apparatus.

Each carriage 40, 50 carries, on the supporting platform 41, 51 a respective electromechanical mechanism 400, 500, for engaging and conducting said rods and which automatically and individually transports each rod from one stage to another in the covering process.

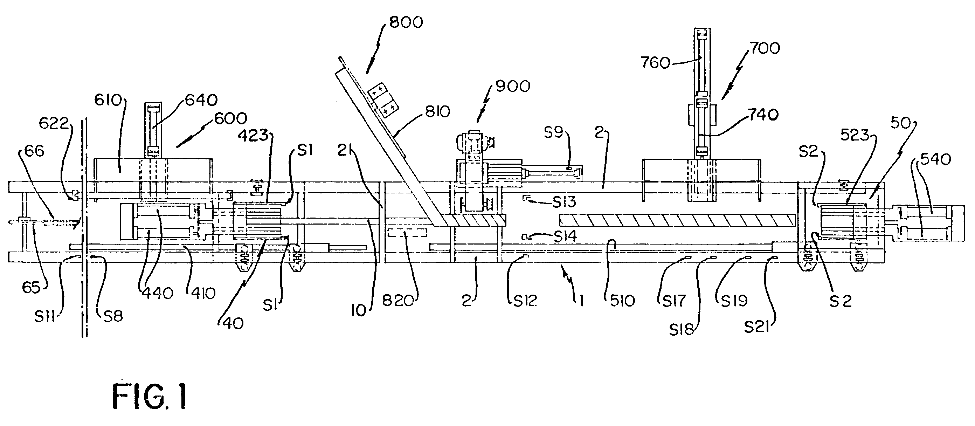

The returning movement of said carriages 40, 50 (in a direction opposite to that made by the drive chain 66) is achieved through the action of respective first and second movable support advance impelling means 410, 510 (fig. 1), in the form of hydraulic cylinders, which make the respective carriage return to its operative initial position. This retraction is controlled by respective presence sensors, which are disposed on the basic structure 1 and which detect and inform the presence of the respective carriage 40, 50, in this portion of the basic structure 1. In both cases, the activation of said presence sensors also determines the releasing of a rod 10 that is being taken by one of said first and second carriages 40, 50 to the next stage of the covering process thereof, as described below.

The engaging mechanisms 400, 500 further include first and second rod fixing means 420, 520, in the form of a lathe (back center), which carries at its free end a corresponding gripping means 421, 521, particularly in the form of a gripping jaw, which respectively and sequentially surrounds and holds the first and second free ends of a matrix rod 10, according to the stage of the covering process. During the feeding operation of the present apparatus, the gripping jaw 421 of the first carriage 40 surrounds and holds the first end of a rod 10, which is going to be covered and which is already positioned at the apparatus. The gripping jaw 521 of the second carriage 50 will act upon the second end of the same rod 10 cited above, just after the covering of said second end has occurred.

In order to coordinate the movement of each respective gripping jaw 421, 521, the engaging mechanism 400, 500 presents corresponding first and second jaw controlling means 422, 522, such as a hydraulic cylinder, operatively connected to the respective gripping jaw 421, 521 through a non-illustrated stem, disposed inside the corresponding lathe 420, 520.

Each lathe/gripping jaw and cylinder assembly is mounted onto respective first and second gripping means impelling means, particularly in the form of movable platforms 430, 530, which slide on corresponding first and second guide-rails 431, 531 between a rod conducting advanced operative position and a rod releasing retracted inoperative position.

The sliding of each first and second movable platforms 430, 530 on corresponding guide-rails 431, 531, which are attached on respective carriage 40, 50, is controlled by respective first and second operational controlling means 440, 540, preferably in the form of a pair of hydraulic cylinders, the cylinders of each pair being laterally disposed on the respective supporting platform 41, 51 and engaged through a respective mutual transversal beam 441, 541, with the corresponding first and second movable platforms 430, 530. The use of hydraulic cylinders is due to the necessity of a precise constant translational speed, during the operation of the present apparatus.

Each engaging mechanism 400, 500 further carries, on the respective movable platform 430, 530, second and third matrix rod rotative driving mechanisms, in the form of moto-reducers 450, 550, which command a continuous rotative movement of the lathe/gripping jaw assembly, and which allow said assembly to have an adjustable rotation, as a function of the rotation required for covering the rods. For the operation of the present apparatus, said second and third moto-reducers 450, 550 impart the same rotation to the matrix rods 10, avoiding the occurrance of relative rotative movement between the rods and consequent damage thereof. Each said engaging mechanism 400, 500 further presents first and second pairs of presence sensors S1, S2, attached to respective movable platforms 430, 530, laterally to said respective gripping jaws 421, 521, said sensors controlling the actuation of the respective first and second jaw controlling means 422, 522, for closing each said gripping jaw 421, 521 around the corresponding rod end, upon detecting the presence of said rod ends inside said gripping jaws 421, 521. In the preferred illustrated form, each carriage 40, 50 carries, laterally to its respective gripping jaw 421, 521, two presence sensors S1, S2 (fig. 1) one of which being a safety sensor, and both being mounted, respectively, to a corresponding supporting arm 423, 523, attached to the respective movable platform 430, 530.

Another embodiment of the invention presents only first and second sensors S1, S2, each provided inside respective gripping jaws 421, 521.

Moreover, at least one of said engaging mechanisms 400, 500, particularly the engaging mechanism of the first carriage 40, further supports a third presence sensor S3 (fig. 2), mounted on a projecting arm 460, upperly disposed relative the basic structure 1, but attached to the movable platform 430 of the same first carriage 40. This presence sensor S3 informs the engagement between the free ends of two consecutive matrix rods 10 moving on the present apparatus, by emitting a delayed signal to the first platform actuating means 440, thus avoiding the advance thereof and consequently the longitudinal movement of the first rod in relation to the second rod.

As described below, the first and second operational controlling means 440, 540, are actuated in a stage of the covering process, in order to increase the relative speed between each gripping jaw 421, 521 and respective carriage 40, 50, thus allowing the engagement between two consecutive rods.

Although it is not illustrated, said third sensor S3 could optionally be provided at the engaging mechanism 500 of the second carriage 50.

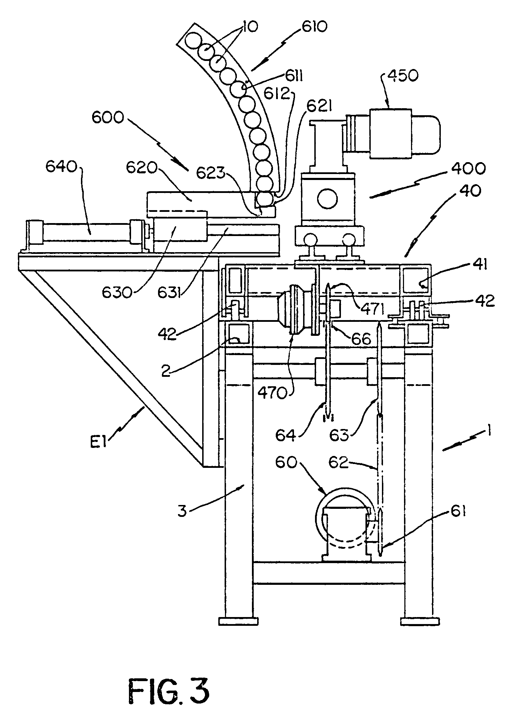

The apparatus in question further presents, as best illustrated in figure 3, a rod feeding device 600, which is mounted laterally to the longitudinal upper beams 2, on a first auxiliary structure E1, disposed adjacent said first carriage 40, when the latter is in its retracted inoperative position, comprising a magazine 610, whereupon a plurality of matrix rods 10 is laid, said rods being disposed parallely to the longitudinal direction of the rod operational movement, said magazine 610 presenting a downwardly bent conducting channel 611, with an outlet lower nozzle 612, which is opened to the present apparatus, so that each rod 10 to be covered can be fed to the engaging mechanism 400 of the first carriage 40, in a determined position.

Disposed beneath said outlet nozzle 612, said rod feeding device 600 presents a rod positioning means 620, which receives, automatically, individually, sequentially and by gravity each rod 10 from the magazine 610. The conduction of each matrix rod 10 towards said rod positioning means 620 occurs whenever the latter returns to the inoperative resting position, wherein, when out of this position, said means avoids the downward movement of the lower rod from the magazine.

The rod positioning means 620 is attached to a third movable platform 630, which slides on a corresponding third guide-rail 631, mounted to the first auxiliary structure E1 so that, at the retracted inoperative position of the first carriage 40, the first end of a rod in a resting condition is disposed laterally adjacent to the gripping jaws 421 of the engaging-conducting mechanism 400, though it is not aligned with the axis of the operative longitudinal movement of said rods.

The movable platform/rod positioning means assembly is impelled by a third platform actuating means 640, in the form of a positioning hydraulic cylinder, which moves the third movable platform 630 between a rod receiving inoperative position and a rod delivering operative position.

In the embodiment of the present invention, the first rod positioning means 620 is defined by a first supporting platform 621, which carries, at its lateral ends, rod supporting stems 622 (see fig. 1), which present, at their ends facing the basic structure 1, corresponding first end recesses 623, which create, at said rod supporting stems 622, a rod housing presenting the height corresponding to the diameter of a matrix rod 10. Each first end recess 623 is sligtly upwardly inclined, relative to the corresponding rod supporting stem 622, in order to avoid the fall of a matrix rod 10 deposited thereon and waiting to be delivered to the first carriage 40. Said supporting stems 622 act as retaining forks on said matrix rods 10, allowing the exit of each rod from said retaining fork, upon the engagement of the first free end of the matrix rod 10 with the gripping jaw 421 of the rod engaging-conducting mechanism 400 of the first carriage 40.

At the inoperative position, the first end recess 623 presents its back wall matching the back internal edge of the outlet nozzle 612 of the magazine 610, allowing the free access of each matrix rod 10 towards said first end recess 623. In a non-illustrated embodiment of the invention, the walls of said first end recess 623 are orthogonal to each other. In an alternative embodiment of the invention, said first end recess 623 presents walls, whose profiles match the profile of the rods to be laid thereon.

In another embodiment, the first rod positioning means 620 presents the end recesses incorporating small projections, which are elastically deformable between a rod retaining position, when they avoid the involuntary rolling of the rod out from the first end recess 623, and a rod gripping position, when a force applied to remove said rod 10 from said first end recess 623 is higher than the retaining elastic force of the projections.

The closing of the gripping jaw 421 around a rod 10 occurs by action of the pair of first sensors S1. The closing command is made through a timed signal, emitted by said pair of first sensors S1 to the gripping jaw 421. The control for closing the gripping jaw 521 of the second carriage 50 occurs similarly to the one described above, by action of the already described second pair of sensors S2.

On the first jaw controlling means 422, a fourth sensor S4 and a fifth sensor S5 are disposed. The fourth sensor S4 detects the operational position of the first jaw controlling means 422, corresponding to the closed jaw condition 421 and activates the engagement of the first carriage 40 with the drive chain 66, through a first engaging means 470 of the engaging-conducting mechanism 400.

In the preferred illustrated embodiment, the engaging means 470 takes the form of a clutch, which is hydraulically or electromagnetically driven, and which is disposed in such a way as to attach, to the first carriage 40, the transversal shaft of an engaging toothed wheel 471 that is in constant engaging condition with the drive chain 66. In this disposition, when the clutch is in its normally disengaged condition, the engaging toothed wheel 471 rotates freely around its transversal shaft journalled to the first carriage 40, due to the continuous longitudinal movement of the drive chain 66. Upon actuating the clutch 470 (engaging means), the shaft of the engaging toothed wheel 471 stops rotating freely, being locked in relation to the first carriage 40, thus allowing the immediate longitudinal movement of the latter, together with the drive chain 66, and in the same speed of said chain. When the engaging toothed wheel 471 is locked by the activation of the first engaging means 470, the teeth of the former act as jaws of the first carriage that are engaged with the drive chain 66.

The fifth sensor S5 detects the operational position of the first jaw controlling means 422, corresponding to the opening condition of the first gripping jaw 421 and activates the first engaging means 470, in order to cause the liberation of the first carriage 40 in relation to the drive chain 66.

The opening of the first gripping jaw 421 will be described hereinafter.

It should be understood that the second jaw controlling means 522 of the second carriage 50 further carries a sixth sensor S6 and a seventh sensor S7, whose function is similar to that described for the fourth sensor S4 and the fifth sensor S5 of the first carriage 40.

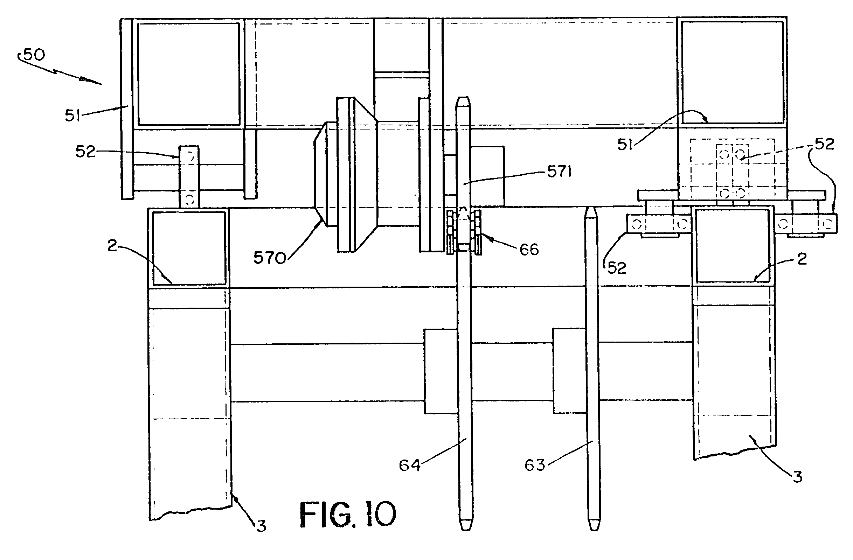

As described hereinafter and best illustrated in figure 10, the second carriage 50 further presents a respective second engaging means 570, with a disposition similar to that described for the first engaging means 470, in order to allow the second carriage to be selectively and automatically engaged with the drive chain 66. The reference numbers of the parts having the same function in both carriages differ one from the other only by the first number, which in the second carriage is "5".

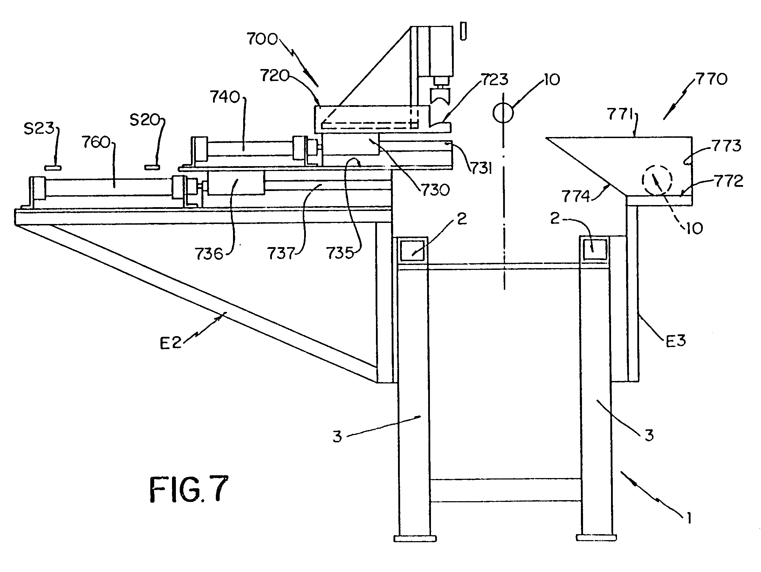

Adjacent the opposite end of the basic structure 1, the apparatus presents a rod removing mechanism 700, as best illustrated in fig. 7, similar to the rod feeding device 600, said rod removing mechanism 700 being mounted onto a second auxiliary structure E2, laterally disposed relative the basic structure 1, so as to remove each already covered matrix rod 10 from the present apparatus, parallely to the adjacent longitudinal upper beam 2 of said basic structure 1.

As the first auxiliary structure E1, the second auxiliary structure E2 is mounted in such a way that, in the rod delivering operative position, in which the second carriage 50 delivers the rods to said rod removing mechanism 700, the already covered matrix rod 10 remains coplanar to a second receiving end recess 723, provided at a second rod positioning means 720, similar to the first rod positioning means 620, attached onto a fourth movable platform 730, which slides on a corresponding fourth guide-rail 731, by action of a fourth platform actuating means 740, such as a hydraulic cylinder, which leads said fourth movable platform 730 towards the inoperative, receiving and operative positions.

The fourth positioning means 720/fourth movable platform 730 assembly is mounted to a second supporting platform 735, which is attached at its lower side, to a fifth movable platform 736, which slides on a corresponding fifth guide-rail 737, by action of a fifth platform actuating means 760, the latter being attached to the second auxiliary structure E2. Said fifth actuating means 760 moves the fifth movable platform 736 through an inoperative position, laterally retracted away from the longitudinal path of the rods, a covered rod receiving position and an operative condition for releasing the rods to a rod storage 770, provided on a third auxiliary structure E3, laterally disposed relative the basic structure 1, and opposed to the auxiliary structure E2.

The rod storage 770 presents a rod receiving nozzle 771 and a bottom wall 772, wherefrom there are projected a back wall 773 for retaining the rods introduced into said rod storage 770, and a front wall 774 for receiving the rods, where the already covered matrix rods 10 are individually and sequentially laid. Said front wall 774 is angularly disposed to the bottom wall 772, thus forming a ramp, wherefrom said matrix rods 10 slide when released from the second end recess 723. In the preferred embodiment, the back wall 773 is orthogonal to said bottom wall 772. Both front wall 774 and back wall 773 of the rod storage 770 present the upper end edge thereof inferiorly disposed to the lower edge of the second end recess 723. Optionally, said upper end edge is aligned with the lower edge of the second end recess 723.

Besides the rod feeding device 600 and the rod removing mechanism 700, the present apparatus further includes a covering strip feeding mechanism 800 and a cutting mechanism 900, which will be described below.

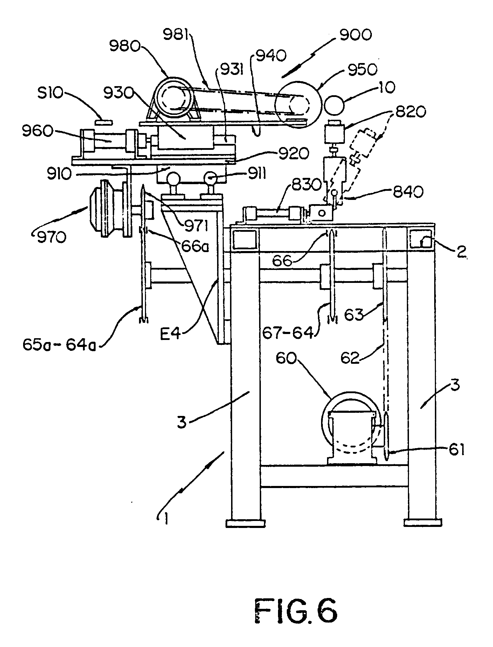

The covering strip feeding mechanism 800 comprises a fabric strip continuous feeding means 810, which strip will be heat-fused onto the external surface of each matrix rod 10, during the operation of the present apparatus, and a heat source 820, which presents a covering operative position, in which it is parallely disposed relative the matrix rod 10 transported by the first carriage 40, and an inoperative position, away from the basic structure 1, said inoperative position being achieved by action of a sixth platform actuating means 830 (see fig. 6), particularly a safety cylinder, which causes the spacing of the matrix rod 10 being covered or to be covered from the heat source 820, in case of a voluntary or involuntary interruption of the rod covering process. This spacing is achieved, in emergency cases, by activating a manual button (not illustrated), provided at a control panel (not illustrated either), which commands the separation of the heat source 820 from the adjacent matrix rod, by action of the sixth operational controlling means 830 upon an articulating system 840, provided with a heat source supporting arm, as best illustrated in figure 6.

The heat source 820 does not have a longitudinal movement in relation to the basic structure 1.

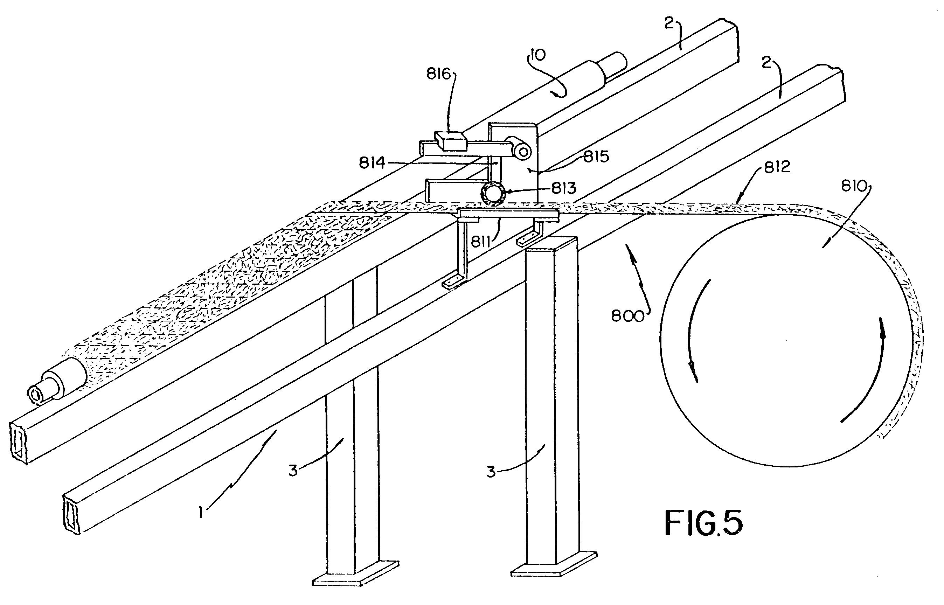

The fabric strip continuous feeding means 810 includes a horizontal channel 811, which directs a covering strip 812 obliquely onto a moving matrix rod 10, and a tensile roller 813, provided on the channel 811, is supported by a rocking arm 814, articulated to a vertical plate 815, attached to one of the longitudinal upper beams 2 of the structure 1. The tensile roller 813 acts upon the covering strip 812, due to the movement of a weight 816 provided at the rocking arm 814, in such a way that, as a function of the position of the weight 816 relative the rocking arm 814, the roller 813 will exert more or less pressure on the covering strip 812, promoting a pressure or tensile adjustment of the strip upon the moving matrix rod 10, as illustrated in figure 5.

According to what is shown in fig. 6, said articulating system 840 is mounted centrally relative the basic structure 1, so as to have a heat source supporting arm, inferiorly aligned to said matrix rod 10 that is being covered, and medianly to the longitudinal upper beams 2 of the basic structure 1, during the covering operation of the present apparatus.

The operative position of said heat source 820 is obtained at the beginning of the working day, by the advance of the piston of the sixth platform actuating means 830 and by the consequent alignment of the heat source supporting arm relative the first matrix rod 10 to be covered. The interruption of the covering operation causes the retraction of said piston and the consequent misalignment between the heat source and the matrix rod.

In the illustrated embodiment, the operative and inoperative positions of the heat source 820 are angularly offset to each other in about 45 degrees, during a rotative movement in a plane orthogonal to the plane defined by cue longitudinal upper beams 2. Other solutions for the retraction of said heat source 820 are possible, such as through angular or linear displacement, parallely to said plane of the longitudinal upper beams 2, or also perpendicularly to said plane, but linearly spaced therefrom, said solutions presenting the inconvenience of either affecting the access of the operator to a determined portion of the basic structure 1, while the heat source 820 is hot, or further affecting the safety of said operator when said heat source 820 is beyond the dimensions of the basic structure 1.

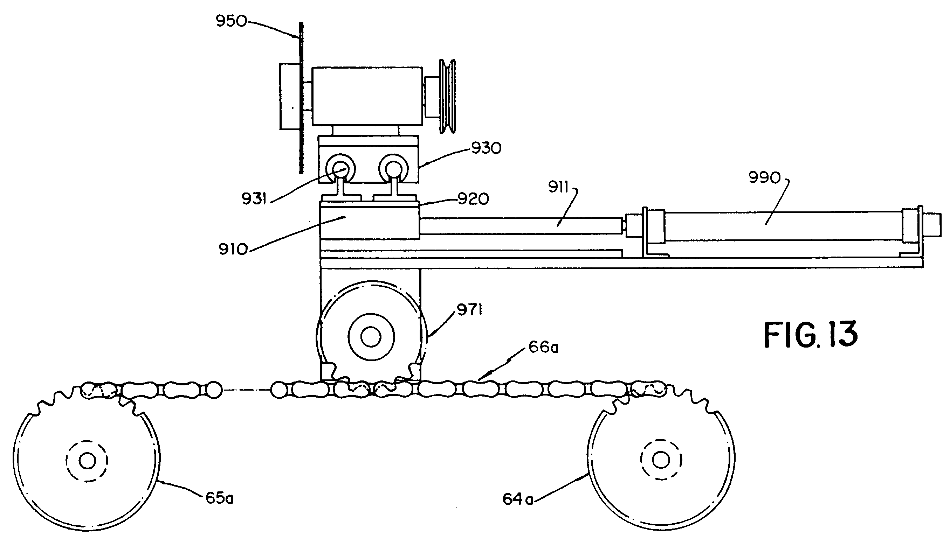

In the illustrated embodiment, which is best shown in figures 6, 12 and 13, the cutting of the fabric after the covering of each rod 10 has been automatically obtained, through the cutting mechanism 900 disposed adjacent the basic structure 1, on a fourth auxiliary structure E4, which is mounted as previously described in relation to the other auxiliary structures and which presents a sixth movable platform 910, which slides on a respective sixth guide-rail 911, provided at the upper part of said auxiliary structure E4, and carrying at its upper part a third supporting platform 920, attached to said sixth movable platform 910, upon which an impelling means 930 is mounted, in the form of a seventh movable platform, which moves on a respective seventh guide-rail 931 and which supports thereon a fourth supporting platform 940, carrying a cutting means 950, particularly an electric saw.

In another embodiment for the apparatus in question, the basic structure 1 incorporates, from at least one of its longitudinal upper beams 2, a fixed marginal structure, whereto are mounted the above cited mechanisms, which are necessary for the operation of said apparatus. Another alternative embodiment for said apparatus presents movable auxiliary structures, which are slidable and which are attached to the basic structure 1, for a better positioning of the above cited mechanisms, as a function of the constructive characteristics of the matrix rods to be covered.

Said seventh movable platform 930 is moved between an inoperative position, of saw retraction, and an operative position, for cutting the covering fabric between an already completely covered rod and a rod beginning to be covered, by action of a seventh platform actuating means 960, mounted on the third supporting platform 920.

Said third supporting platform 920 further carries, at its lower part, a third engaging means 970, which is similar to the first and second engaging means 470 and 570, and which is actuated to promote the selective engagement of the shaft of a respective toothed wheel 971 with said third supporting platform 920. Said engaging toothed wheel 971 is constantly engaged with a longitudinal chain 66a, external to the structure 1, whose shaft, when attached to the cutting mechanism 900, makes the latter immediately move by means of the external longitudinal chain 66a, which is maintained in constant engagement with two toothed end wheels 64a and 65a, the shaft of the latter transversely projecting through the structure 1, in order to support a toothed wheel 67 (see fig. 6), in constant engagement with the drive chain 66. Thus, the external chain 66a is actuated at the same speed of the drive chain 66.

The engagement of the sixth movable platform 910 to the drive chain 66a is controlled by an eighth presence sensor S8 (see fig. 1), provided at one of the longitudinal upper beams 2, in order to detect the passage of the first carriage 40 through the basic structure 1, where said eighth presence sensor S8 is installed. Once activated, said eighth sensor S8 also emits a signal directly to the third engaging means 970, to initiate the movement of the cutting mechanism 900, in the longitudinal direction of the basic structure 1 and at the speed of the carriages 40, 50 moved by the drive chain.

Said saw 950 is disposed in such a way as to present its cutting portion orthogonal to the matrix rods 10.

Said saw 950 is rotatively activated by a fourth moto-reducer 980, through an endless chain 981.

In the illustrated embodiment, the seventh movable platform 930 is mounted in such a way as to be moved orthogonally to the longitudinal upper beams 2, between the retracted and advanced saw positions relative to the axis of the rods in process, allowing said saw 950 to cut the covering fabric between two consecutive matrix rods 10, exactly at the fitting region thereof, when said saw under continuous operation is conducted to its advanced position, by instruction of the eighth presence sensor S8 on the seventh platform actuating means 960. The elimination of the relative translational movement between said cutting mechanism 900 and the matrix rods 10 permits the accurate cut of the fabric between each consecutive pair of matrix rods 10. In order to obtain such accurate cut, while the sixth movable platform 910 moves longitudinally and parallely to the matrix rods 10, the seventh movable platform 930 makes an initial movement towards the advanced position of the electric saw 950.

A ninth presence sensor S9, provided at the sixth movable platform 910 (see fig. 1), is sensitized by the presence of the seventh movable platform 930, when the latter reaches the position where the ninth sensor S9 is located, and when the cutting of the covering fabric between two consecutive matrix rods has finished. Such sensitization determines the retraction of the saw 950, controlled by the seventh platform actuating means 960, as well as the disengagement of the sixth movable platform 910 from the drive chain 66a, controlled by the third engaging means 970. The retraction of the seventh platform actuating means 960 sensitizes a tenth presence sensor S10 of the magnetic type, disposed at the seventh platform actuating means 960, which commands the return of the cutting mechanism 900 to the initial position, through an eighth platform actuating means 990, mounted on the fourth auxiliary structure E4, so as to make the sixth movable platform 910 return to its initial position.

A timer, which is not illustrated, activates, after a certain amount of time subsequent to the activation of the first moto-reducer 60 has elapsed, the third platform actuating means 640, which initiates an advance movement, taking a matrix rod 10 lying on the first end recess 623, towards a precise positioning of said matrix rod 10 in front of the gripping jaw 421 of the first carriage 40, in such a way that, at this positioning, the longitudinal axis of said matrix rod 10 is aligned with the central axis of the gripping jaw 421.

The advance of the third platform actuating means 640 activates an eleventh presence sensor S11, which is provided at one of the longitudinal upper beams 2, and which commands the engagement of the first carriage 40 with the drive chain 66, thus activating the first engaging means 470. With this engagement, the first carriage 40 initiates an advance movement towards the matrix rod 10, which is now at a gripping position at the first end recess 623. The advance movement of the first carriage 40 is continuous, till the matrix rod 10 that is being transported by said first carriage is grasped by the second carriage.

As mentioned before, after the first sensor S1 has detected the entrance of the first free end of the matrix rod 10 inside the gripping jaw 421, the latter is closed by action of the first jaw controlling means 422. This control is effected through a timed signal and determines the beginning of the simultaneous movements of translation and rotation of said matrix rod 10 required for the covering thereof in the present apparatus. While the translational motion of said rod 10 is defined by the movement of the first carriage 40 at this stage of the covering process of said rod 10, the rotational motion is obtained by the continuous rotation of the first rod fixing means 420, produced by the second moto-reducer 450. The motion speeds are controlled by non-illustrated electronic controls, which are independent to each other, wherein the rotational speed can be variable.

Simultaneously to the closing of the gripping jaws 421 around the matrix rod 10 to be covered, there occurs the connection of said rod 10 to the first carriage 40, as well as the return of the third platform actuating means 640 to its inoperative position, when the first rod positioning means 620 receives a second matrix rod 10 to be covered.

The advance movement of the first carriage 40 takes the rod 10 to be covered towards the first guiding assembly 20, whereupon is initially laid the second free end of said rod 10.

Adjacent said first guiding assembly 20, there is provided the covering strip feeding mechanism 800, inferiorly to said longitudinal upper beams 2.

The activation of the heat source 820, till it reaches the ideal temperature, is effected through non-illustrated electronic controls, which command the energization of said heat source 820 at the beginning of each working day.

At a subsequent step, the portion of the second free end of the first matrix rod 10 that is already heated, receives, manually, an end of the covering fabric strip 812 from the continuous feeding means 810 on the heated surface thereof. The covering operation proceeds, by applying said fabric strip 812 on said heated surface, helically and at a constant speed, resulting from the rotational and translational movements of said matrix rod 10.

At the beginning of a working day, the second carriage 50 is positioned close to the third guiding assembly 20, waiting for a matrix rod 10. In this situation, a twelfth presence sensor S12, disposed upstreams the third guiding assembly 20, particularly at the longitudinal upper beam 2, opposed to the third auxiliary structure S3, senses the presence of the second carriage 50, while a thirteenth S13 and a fourteenth S14 presence sensors detect the arrival of the second end of the matrix rod 10, at a certain predetermined distance from the gripping jaw 521 of the second carriage 50. Said sensors S13 and S14 are disposed transversely to the longitudinal upper beams 2. The joint action of said sensors S12, S13 and S14 promote the activation of the second engaging means 570 and the consequent engagement of the second carriage 50 with the drive chain 66, as well as the activation of the second platform actuating means 540, in order to cause the advance of the jaw 521 towards the second end of the matrix rod 10.

Since the matrix rod 10 and the second carriage 50 move at the same speed as the drive chain 66, the activation of the second platform actuating means 540 makes the second gripping jaw 521 rapidly reach the second end of the matrix rod 10. When this happens, the pair of second presence sensors S2 activates the second jaw controlling means 522, causing the closing of the second gripping jaw 521 around the second end of said rod 10 and interrupting the action of the second platform actuating means 540.

At this instant, the matrix rod 10 is connected to both carriages 40, 50, and also rotatively activated by the respective moto-reducers 450, 550. With the rod already held by the closing of the second gripping jaw 521, the sixth sensor S6, which detects the closing condition of the second gripping jaw 521, instructs the first jaw controlling means 422 to open, after a certain delay, the first gripping jaw 421. This sixth sensor S6 also instructs the first engaging means 470 to disengage the first carriage 40 from the drive chain 66, simultaneously to the opening of the first gripping jaw 421. The opening of the first gripping jaw 421 is sensed by the fifth sensor S5, which instructs the first platform actuating means 440 to return to its retracted inoperative position, thus removing the first gripping jaw 421 from the first end of the matrix rod 10. Said fifth sensor S5 further instructs the first movable support impelling means 410 to promote the retraction of the first carriage 40 to its retracted inoperative position.

Upon reaching said retracted inoperative position, the first carriage 40 sensitises a fifteenth sensor S15, which instructs the third platform actuating means 640 to move the third movable platform 630, in order to allow the positioning of a new matrix rod 10, according to the axis of the gripping jaws 421, 521.

The advance of the third operational controlling means 640 activates the eleventh presence sensor S11, which causes a new engagement of the first carriage 40 with the drive chain 66, reinitiating a new cycle, as described above.

In order to avoid the existence of a spacing between the new matrix rod 10 and the matrix rod 10 at the end of the covering process, the fourth presence sensor S4, after detecting the closing condition of the first jaw 421, instructs the first platform actuating means 440 to advance the first jaw 421/new matrix rod 10 assembly towards the first end of the rod being covered.

The relative positioning betwenn the two consecutive matrix rods 10 is detected by action of the third sensor S3, as described above. When activated, said third sensor S3 emits a delayed signal to the first platform actuating means 440, interrupting its advance.

The activation of the third sensor S3 takes place upon the detection of the fitting between the second end of the matrix rod 10 to be covered and the first end of the rod being covered. Since the translational and the rotational motions of both rods 10 are controlled by the same electronic varying device (non-illustrated), the fitting between two consecutive rods 10 does not cause failures or interruptions in the covering process, thus allowing the covering fabric strip 812 to continue to be ininterruptly fed to the present apparatus.

After the covering strip 812 has been cut, the seventh platform actuating means 960 initiates the return of the electric saw 950 to its inoperative position. This movement sensitizes the tenth sensor S10, which also commands the retraction of the second engaging means 570 of the second carriage 50, thus disengaging said second carriage 50 from the drive chain 66. Said tenth sensor S10 also activates the second movable support impelling means 510, which takes the second carriage 50 to the adjacent end of the basic structure 1. This is a quick movement, relatively to the translational speed of the carriages 40, 50, so as not to impair the covering speed of the matrix rods 10 in transit on the present apparatus.

The basic structure 1 further presents a seventeenth presence sensor S17, which is provided at the longitudinal upper beam 2, opposite to that beam which supports the fourth auxiliary structure E4 and which detects the arrival of the second carriage 50 at the adjacent end of the basic structure 1, carrying the matrix rod 10, which is already totally covered and separated from the new matrix rod 10 by the cutting mechanism 900.

The activation of said seventeenth sensor S17 commands the advance of the fifth platform actuating means 760, which carries the second end recess 723, in the form of two supporting arms that are inferiorly disposed relative the matrix rod 10 carried by the second carriage 50, for later receiving said rod 10 and send it to the rod storage 770.

Upstreams the seventeenth sensor S17, an eighteenth presence sensor S18 is provided at the upper beam 2, opposed to the fourth auxiliary structure E4, in order to sense the passage of the second carriage 50 by that portion of the basic structure 1, and then send to the second jaw controlling means 522 of the second carriage 50 a command signal for returning to the initial position and, consequently, for opening the respective gripping jaws 521. The opening of the jaws 521 sensitizes the seventh sensor S7, which then instructs the second platform actuating means 540 to return to its retracted inoperative position.

A nineteenth presence sensor S19, which is provided at the basic structure 1, and which is aligned with the eighteenth sensor S18, is sensitized by the second carriage 50, as it passes by that portion of the basic structure 1. Upon detecting the presence of the second carriage 50, the nineteenth sensor S19 sends a signal to the fifth platform actuating means 760, commanding the advance thereof for moving the fifth movable platform 736 that carries the matrix rod 10 towards the rod storage 770. After the rod has been delivered to said rod storage 770, said fifth platform actuating means 760 sensitizes a twentieth presence sensor S20 of the magnetic type, which commands the return of the fourth and fifth operational controlling means 740, 760, respectively.

After having passed by the nineteenth sensor S19, the second carriage 50 goes on moving till a new position, of travel end, close to the adjacent end of the basic structure 1, when a twenty-first presence sensor S21, which is aligned with said nineteenth sensor S19 at the basic structure 1, detects the presence of the second carriage 50 at the portion of the basic structure 1, and commands the activation of the second movable support impelling means 510, for returning said second carriage 50 to its initial inoperative position, adjacent to the third guiding assembly 20. This return command is caused by the joint action of said twenty-first sensor S21 and a twenty-third sensor S23, positioned on the fifth platform actuating means 760, in order to detect the return of the rod removing mechanism 700 to its retracted initial position.

## Claims

1. Apparatus for the manufacture of paint rollers of the type which allows the helical winding and fixation of a covering strip (812) around a cylindrical matrix rod (10), said apparatus comprising: a basic elongated structure (1); first and second movable supports (40, 50), which are movable on the basic structure (1), between a resting inoperative position and a maximum advance operative position, and which include, respectively, first and second gripping means (421, 521), which are engageable, without any relative rotational movement, to an adjacent end of the matrix rod (10) and to a mechanism (450, 550) to rotatively actuate said matrix rod; sequentially, on the basic structure (1), there is provided a first fixed support (20), after the maximum advance operative position of said first movable support (40); a heat source (820), which superficially fuses the adjacent portion of said matrix rod (10), a covering strip feeding mechanism (800) and a cutting mechanism (900) that cuts said covering strip (812) between two consecutive matrix rods (10); a movable support impelling mechanism (66); and first and second engaging means (470, 570), which engage respectively and selectively said first and second movable supports (40, 50) with the movable support impelling mechanism (66), so as to make each movable support move from the resting inoperative position towards the maximum advance operative position, said apparatus being characterized in that it further comprises:
- first and second movable supports (40, 50), carrying respectively thereon, the first and second gripping means (421, 521), which are movable between a retracted inoperative position and an advanced operative position, and first and second gripping means impelling means (430, 530), moving the respective gripping means (421, 521) between said retracted inoperative and advanced operative positions;
- a rod feeding device (600), including a first rod positioning means (620), which positions a matrix rod (10) in front of the first movable support (40), at its resting inoperative position, aligned longitudinally with the first and second gripping means (421, 521);
- an eleventh sensor (S11), provided in order to detect the presence of a matrix rod (10) at the positioning means (620), and to activate the first engaging means (470), by engaging the first movable support (40) with the movable support impelling mechanism (66);
- a first sensor means (S1, S4), provided at the first movable support (40), in order to detect the coupling between the first gripping means (421) and the adjacent end of the matrix rod (10), on the first rod positioning means (620), and to instruct the first gripping means impelling element (430) to move to its advanced operative position;
- a third sensor (S3), mounted to either one of the first and second movable supports (40, 50), in order to detect the coupling of the free end of a non-covered matrix rod (10), to one of the parts defined by the free end of another consecutive matrix rod (10) being covered and by the second gripping means (521), and to interrupt the advance of the first gripping means (421) at its advanced operative position, each matrix rod (10) having its ends provided with a coupling means, in order to allow the engagement, without any relative axial and rotational motions, with the free end of another consecutive matrix rod (10);
- the cutting mechanism (900) being provided with cutting means (950), mounted to the basic structure (1), so that it is movable between a retracted inoperative position and an advanced operative position relative to the covered matrix rod (10), in order to cut the covering Strip (812) at the junction region of two consecutive matrix rods (10), according to a plane orthogonal to the axis of said matrix rods (10), the movement of said cutting means (950) being achievable through impelling means (66, 930), mounted between the basic structure (1) and the cutting means (950);
- an eighth sensor (S8), provided on the basic structure (1), in order to detect the passage of the free end of the non-covered matrix rod (10) through the covering strip feeding mechanism (800), as a function of the relative positioning of either one of the first and second movable supports (40, 50) and the basic structure (1), and to command the activation of the impelling means (66, 930), in order to make the cutting element (950) advance to its operative position;
- a ninth sensor (S9), provided at the cutting mechanism (900), in order to detect the advanced operative position of the cutting means (950), and to command the return of the impelling means (930) to the retracted inoperative position of the cutting means (950);
- a first movable support advance impelling means (510), mounted between the basic structure (1) and the second movable support (50), in order to move the latter to its maximum advance operative position, upon the disengagement of said second movable support (50) from the movable support impelling means (66);
- an eighteenth sensor (S18, S7), provided in at least one of the parts defined by the basic structure (1) and the second movable support (50), in order to detect the passage of the second movable support (50) at a first advanced operative position, close to the maximum advance operative position, and to cause the disengagement of the second gripping means (521) from the adjacent end of a covered matrix rod (10), upon the return of the second gripping means (521) to the retracted inoperative position, thus allowing the matrix rod (10) to be removed from said apparatus;
- second and third movable support advance impelling means (410, 510), mounted between the basic structure (1) and the respective first and second movable supports (40, 50), in order to make the latter return to their respective resting inoperative position, after they have achieved the respective maximum advance operative position;
- a twenty-first sensor (S21), mounted onto the basic structure (1), in order to detect the arrival of the second movable support (50) to the maximum advance operative position, and to activate the third movable support advance impelling means (510);
- a twelfth sensor (S12), provided on the basic structure (1), in order to detect the presence of the second movable support (50), at the resting inoperative position, and to command the advance of the second gripping means (521) to the maximum advance operative position, as well as the engagement of the second engaging means (570) with the movable support impelling mechanism (66);
- a second sensor (S2, S6), provided on the second movable support (50), in order to detect the coupling between the second gripping means (521) and the already covered adjacent end of a matrix rod (10), and to instruct the disengagement of the first gripping means (421) from the non-covered adjacent end of the matrix rod (10), and of the first engaging means (470) from the movable support impelling mechanism (66);
- a fifth sensor (S5), provided on the first movable support (40), in order to detect the disengagement of the first gripping means (421) from the non-covered adjacent end of a matrix rod (10), to command the return of the first gripping means (421) to the retracted inoperative position, and to activate the second movable support advance impelling means (410);
- a fifteenth sensor (S15), provided at one of the parts defined by the basic structure (1) and the first movable support (40), in order to detect the return of the latter to the resting inoperative position, and to instruct the first rod positioning means (620) to move to its operative position, for supporting a new matrix rod (10) in front of the first movable support (40).

2. Apparatus, as in claim 1, characterized in that the first rod positioning means (620) is movable between an inoperative position, away from the path of the first movable support (40), and the operative position of supporting the matrix rod (10) in front of the first movable support (40).

3. Apparatus, as in claim 2, characterized in that the inoperative position of the positioning means (620) is achievable through a transversal retraction of the latter, relatively to the basic structure (1), for individually receiving each matrix rod (10) to be fed to the apparatus.

4. Apparatus, as in claim 3, characterized in that the rod positioning means (620) is mounted onto a third movable platform (630), which is disposed close to the basic structure (1) and which is movable between the inoperative and operative positions by a third platform actuating means (640).

5. Apparatus, as in claim 2, characterized in that the rod feeding mechanism (600) further includes a magazine (610), mounted close to the basic structure (1), in order to store and to release, individually and by gravity, each matrix rod (10) to the first rod positioning means (620), whenever the latter is in its inoperative position.

6. Apparatus, as in claim 1, characterized in that the first and second gripping means (421, 521) are mounted, respectively, on first and second movable platforms (430, 530), which are movable between the advanced operative and retracted inoperative positions, by the activation of the respective platform actuating means (440, 540), mounted between said platforms and the respective first and second movable supports (40, 50).

7. Apparatus, as in claim 6, characterized in that the third sensor (S3) is mounted to a supporting arm (423), attached to the first movable platform (430).

8. Apparatus, as in claim 6, characterized in that the first and second gripping means (421, 521) are in the form of gripping jaws, presenting a rod retaining operative condition and a rod releasing inoperative condition, said operative conditions being achieved by action of respective first and second jaw controlling means (422, 522), mounted onto the respective first and second movable platforms (430, 530).

9. Apparatus, as in claim 8, characterized in that the closed jaw and open jaw conditions are obtained, respectively, by instruction from the first sensor (S1) and second sensor (S2).

10. Apparatus, as in claim 9, characterized in that the closed condition of the first and second gripping jaws (421, 521) is detected, respectively, by the fourth and sixth sensors (S4, S6), each sensor being mounted adjacent to a respective jaw controlling means (422, 522).

11. Apparatus, as in claim 9, characterized in that the open jaw condition of the first and second gripping jaws (421, 521) is detected, respectively, by the fifth and seventh sensors (S5, S7), each sensor being mounted adjacent to a respective jaw controlling means (422, 522).

12. Apparatus, as in claim 1, characterized in that the first and third movable support impelling means (510) are defined by a second movable support impelling means.

13. Apparatus, as in claim 12, characterized in that the second movable support impelling means (510) selectively takes the second movable support (50) towards the resting retracted inoperative position and advanced operative position.

14. Apparatus, as in claim 1, characterized in that the impelling means (930) is mounted onto a sixth movable platform (910), which is movable between the resting inoperative and advanced operative positions, parallely to the basic structure (1), in order to follow the longitudinal movement of the matrix rods (10) being covered.

15. Apparatus, as in claim 14, characterized in that the impelling means (930) is in the form of a seventh movable platform, which slides orthogonally to the basic structure (1), between the retracted inoperative and advanced operative positions of the cutting means (950), by action of a corresponding seventh platform actuating means (960), mounted between said cutting means and the basic structure (1).

16. Apparatus, as in claim 15, characterized in that the longitudinal movement of said sixth movable platform (910) is achievable by the engagement thereof with the movable support impelling mechanism (66), through a respective third engaging means (970).

17. Apparatus, as in claim 15, characterized in that the first, second and third engaging means (470, 570, 970) comprise clutches, which are respectively mounted to the first and second movable supports (40, 50) and to the cutting mechanism (900), in order to engage them with the movable support impelling mechanism (66).

18. Apparatus, as in claim 16, characterized in that each clutch engages a toothed wheel with the first, second and sixth movable platforms (430, 530, 910), respectively, each toothed wheel (471, 571, 971) being in constant engagement with the movable support impelling mechanism (66).

19. Apparatus, as in claim 18, characterized in that the movable support impelling mechanism (66) is a drive chain, which is actuatable by a first moto-reducer (60) through toothed wheels (64, 65) mounted at the ends of the basic structure (1).

20. Apparatus, as in claim 1, characterized in that the basic structure (1) carries a second fixed support (20), provided adjacent the cutting mechanism (900), in order to support the free covered end of a matrix rod (10), which is attached at its opposite end to the movable support (50).

21. Apparatus, as in claim 20, characterized in that the basic structure (1) further carries a third fixed support (20), disposed between the covering mechanism (800) and cutting mechanism (900), in order to support and to direct, for the cutting operation, the mutually fitted covered ends of two consecutive matrix rods (10).

22. Apparatus, as in claim 1, characterized in that the heat source (820) is automatically and angularly movable between an inoperative position, away from the axis of the rods being covered, and an operative position adjacent said rod axis, by action of a sixth platform actuating means (830), which is mounted at the lower portion of the basic structure (1).

23. Apparatus, as in claim 1, characterized in that a tenth presence sensor (S10) is provided adjacent the seventh platform actuating means (960), in order to sense the retraction of the cutting means (950) to its inoperative position and to command the return of the cutting mechanism (900) to its retracted inoperative position; to deactivate the engagement of the second movable support (50) with the movable support impelling mechanism (66) and to activate the first movable support impelling means (510), in order to take said second movable support (50) to its maximum advance position.

24. Apparatus, according to claim 1, characterized in that it further comprises:
- a rod removing mechanism (700), including a second rod positioning means (720), which receives an already covered matrix rod (10) from the second movable support (50) at a first rod receiving operative position and which presents a resting inoperative position;
- a seventeenth sensor (S17), disposed at the basic structure (1), in order to detect the passage of the second movable support (50) through the cutting mechanism (900) and to command the advance of the second rod positioning means (720) towards the first rod receiving operative position;
- a nineteenth sensor (S19, S20), disposed in at least one of the parts defined by the basic structure (1) and the second movable support (50), in order to detect the arrival of the latter to its first advance operative position, and to detect the advance of the second rod positioning means to its first rod removing operative position;
- a twentieth sensor (S20), disposed at the rod removing mechanism (700), in order to detect the advance of the second positioning means (720), at least towards the first rod receiving operative position, and to command the return of the positioning means (720) to the resting inoperative position;
- a twenty-third sensor (S23), disposed at the rod removing mechanism (700), in order to detect the return of the second rod positioning means (720) to the resting inoperative position, and to activate, together with the twenty-first sensor (S21), the third movable support advance impelling means (510).

25. Apparatus, as in claim 24, characterized in that said rod removing mechanism (700) is mounted close to a portion of the basic structure (1), in which there is provided the second movable support (50) in its first advance operative position.

26. Apparatus, as in claim 25, characterized in that at said rod receiving operative position, the second rod positioning means (720) receives selectively, automatically, individually and by gravity, each matrix rod (10) from the second movable support (50), in order to deliver said rod to a rod storage (770), mounted close to the basic structure (1), which is aligned with the second rod positioning means (720).

27. Apparatus, as in claim 26, characterized in that the second rod positioning means (720) presents a second maximum advance operative position, in which it moves each matrix rod (10) beyond the alignment between the first and second gripping means (421, 521), in order to deliver said matrix rods (10) to the rod storage (770).

28. Apparatus, as in claim 27, characterized in that the movement of the second rod positioning means (720) to and from its resting inoperative position is achieved through the movement of a fourth movable platform (730), orthogonally to the longitudinal movement of a matrix rod at the basic structure (1).

29. Apparatus, as in claim 28, characterized in that the resting inoperative and advanced operative positions of the fourth platform (730) are achievable by action of a fourth platform actuating means (740), mounted adjacent the basic structure (1).

30. Apparatus, as in claim 29, characterized in that the first and second rod positioning means (620, 720) are in the form of retaining forks, whose free ends are provided with first and second end recess (623, 723), respectively, for individually receiving and retaining each matrix rod (10).

31. Apparatus, as in claim 30, characterized in that the fourth movable platform (730) is mounted onto a fifth movable platform (736), in order to promote the movement of the second positioning means (720) to and from its maximum advance operative position.

32. Apparatus, as in claim 31, characterized in that said movement to and from the maximum advance operative position of the fifth movable platform (736) is achievable by action of a fifth platform actuating means (760), mounted close to the basic structure (1).

33. Process for the manufacture of paint rollers, in which a covering strip (812) is helically attached to a cylindrical tubular matrix rod (10), by rotating the latter on a rod covering apparatus, characterized in that it comprises the steps of:
a- positioning a first matrix rod in a covering operative longitudinal direction on the rod covering apparatus;
b- detecting the positioning of the first matrix rod at said operative longitudinal direction and submitting said matrix rod to an axial movement in a covering operative direction, at a first constant speed and a predetermined rotation;
c- detecting the beginning of the axial movement and submitting the matrix rod to a first constant axial movement, during a certain time in the operation of said axial and rotational movements;
d- detecting the arrival of a first matrix rod end, which faces the covering operative direction, at a determined position of its axial movement, and superficially heating the matrix rod, from said first end, while said matrix rod is moving at said first constant speed after the acceleration;
e- initiating the continuous covering of the matrix rod under rotation, from said first end, after the superficial heating thereof;
f- positioning a second matrix rod at the covering operative longitudinal direction, when the first matrix rod reaches a position in its axial movement, sufficient to allow said positioning of the second matrix rod on the covering apparatus;
g- submitting the second matrix rod to the stage "b" described above;
h- detecting the beginning of the axial movement of the second matrix rod and submitting the same to the first acceleration, while the axial movement is taking place, said acceleration being sufficient and necessary for engaging the first rod end with a second end of the first matrix rod being covered;
i- submitting the second matrix rod to stages "d" and "e" described above, whilst maintaining its first end engaged with the second end of the first matrix rod;
j- cutting the covering strip, at the region of engagement between the first and second matrix rods, according to a plane orthogonal to the covering operative direction;
k- detecting the end of the cutting operation of the covering strip, and submitting the first matrix rod to a second axial constant acceleration, in the operative direction of movement and during a certain time, enough to allow the axial separation of the adjacent ends of two consecutive matrix rods;
l- detecting a position of the first matrix rod axially spaced from the second matrix rod, and removing the first covered matrix rod from the covering apparatus;
m- repeating stages "j" up to "l" for the subsequent rods;

34. Process, as in claim 33, characterized in that the stage of positioning the first matrix rod (10) in the operative longitudinal direction includes the step of moving automatically, individually and sequentially, each matrix rod (10) from a position external to the covering apparatus, to the position at the covering operative longitudinal direction.

35. Process, as in claim 34, characterized in that each matrix rod (10) is sequentially and individually fed by gravity to the position external to the covering apparatus.

36. Process, as in claim 33, characterized in that each matrix rod (10) is axially moved, by applying an axial force to the second end thereof, till its first end is completely covered, said movement being made afterwards by action of an axial traction to the first end.

37. Process, as in claim 33, characterized in that the first axial acceleration is achieved, by applying an axial force to the second end of each matrix rod (10), the second axial force being obtained by applying an axial traction to the first end of said matrix rod (10).

38. Process, as in claim 33, characterized in that the stage of removing each matrix rod (10) from the covering apparatus includes the step of moving automatically, individually and sequentially each matrix rod (10) from a position internal to said covering apparatus, at the covering operative longitudinal direction, to a rod removing external position.

## Patentansprüche

1. Vorrichtung zur Herstellung von Farbrollern, der Art, die das schraubenförmige Aufwickeln und Befestigen eines Überzugsbandes (812) um eine zylindrische Matrixstange (10) gestattet, wobei diese Vorrichtung eine längliche Grundstruktur (1), erste und zweite bewegliche Stützen (40, 50), die auf der Grundstruktur (1) zwischen einer nicht-wirksamen Ruhestellung und einer maximal ausgefahrenen Arbeitsstellung bewegbar sind und die erste bzw. zweite Einspannmittel (421, 521) umfassen, welche ohne irgendeine relative Drehbewegung mit einem benachbarten Ende der Matrixstange (10) und mit einem Mechanismus (450, 550) zur Drehbetätigung der Matrixstange in Eingriff bringbar sind, wobei auf der Grundstruktur (1) nacheinander eine erste feste Stütze (20) hinter der maximal ausgefahrenen Arbeitsstellung der ersten beweglichen Stütze (40), eine Wärmequelle (820), die den anliegenden Abschnitt der Matrixstange (10) oberflächlich anschmilzt, ein Mechanismus (800) zum Zuführen des Überzugsbandes und ein Schneidemechanismus (900) vorgesehen sind, der das Überzugsband (812) zwischen zwei aufeinanderfolgenden Matrixstangen (10) schneidet, ferner einen Antriebsmechanismus (66) für die beweglichen Stützen sowie erste und zweite Kupplungsmittel (470, 570) aufweist, welche nacheinander die erste bzw. zweite bewegliche Stütze (40, 50) an den Antriebsmechanismus (66) für die beweglichen Stützen ankoppeln, um zu bewirken, daß jede bewegliche Stütze von ihrer nicht-wirksamen Ruhestellung zu ihrer maximal ausgefahrenen Arbeitsstellung bewegt wird, und wobei diese Vorrichtung **dadurch gekennzeichnet** ist, daß sie weiterhin folgendes umfaßt:
- erste und zweite bewegliche Stützen (40, 50), die die ersten bzw. die zweiten Einspannmittel (421, 521), die zwischen einer zurückgezogenen, nicht-wirksamen Stellung und einer ausgefahrenen Arbeitsstellung beweglich sind, und Antriebsmittel (430, 530) für die ersten und zweiten Einspannmittel tragen, welche die jeweiligen Einspannmittel (421, 521) zwischen dieser zurückgezogenen, nicht-wirksamen Stellung und der ausgefahrenen Arbeitsstellung bewegen;
- eine Stangenzuführeinrichtung (600), die erste Stangenpositioniermittel (620) umfaßt, die in ihrer nicht-wirksamen Ruhestellung eine Matrixstange (10) vor der ersten beweglichen Stütze (40) in Längsausrichtung zu den ersten und zweiten Einspannmitteln (421, 521) positioniert;
- einen elften Sensor (S11), der dazu vorgesehen ist, das Vorhandensein einer Matrixstange (10) an den Positioniermitteln (620) zu detektieren und die ersten Kupplungsmittel (470) zu aktivieren durch Ankoppeln der ersten beweglichen Stütze (40) an dem Antriebsmechanismus (66) für die beweglichen Stützen;
- erste Sensormittel (S1, S4), die an der ersten beweglichen Stütze (40) vorgesehen sind, um das Ankoppeln zwischen den ersten Einspannmitteln (421) und dem benachbarten Ende der Matrixstange (10) auf den ersten Stangenpositioniermitteln (620) zu detektieren und das Antriebselement (430) für die ersten Einspannmittel anzuweisen, sich in seine ausgefahrene Arbeitsstellung zu bewegen;
- ein dritter Sensor (S3), der an einer der ersten und zweiten beweglichen Stützen (40, 50) montiert ist, um das Ankoppeln des freien Endes einer nicht mit einem Überzug versehenen Matrixstange (10) an eines der Teile zu detektieren, die von dem freien Ende einer anderen, folgenden, mit einem Überzug versehenen Matrixstange (10) und von den zweiten Einspannmitteln (521) festgelegt werden, und das Ausfahren der ersten Einspannmittel (421) in deren ausgefahrener Wirkstellung zu unterbrechen, wobei jede Matrixstange (10) an ihren Enden mit einer Kupplungseinrichtung versehen ist, um ohne irgendeine relative Axial- und Drehbewegung das Ankoppeln mit dem freien Ende einer anderen nachfolgenden Matrixstange (10) zu gestatten;
- der mit Schneidmitteln (950) versehene Schneidmechanismus (900) ist an der Grundstruktur (1) derart befestigt, daß er zwischen einer zurückgezogenen, nicht-wirksamen Stellung und einer ausgefahrenen Arbeitsstellung relativ zu der mit einem Überzug versehenen Matrixstange (10) beweglich ist, um das Überzugsband (812) am Verbindungsbereich zweier aufeinanderfolgender Matrixstangen (10) entsprechend einer zur Achse dieser Matrixstangen (10) senkrechten Ebene zu schneiden, wobei die Bewegung dieser Schneidmittel (950) durch Antriebsmittel (66, 930) erzielbar ist, die zwischen der Grundstruktur (1) und den Schneidmitteln (950) montiert sind;
- einen achten Sensor (S8), der auf der Grundstruktur (1) angebracht ist, um den Durchlauf des freien Endes der nicht mit einem Überzug versehenen Matrixstange (10) durch den Mechanismus (800) zum Zuführen des Überzugsbandes als Funktion der relativen Positionierung irgendeiner der ersten und zweiten beweglichen Stützen (40, 50) und der Grundstruktur (1) zu detektieren und die Aktivierung der Antriebsmittel (66, 930) zu steuern, um das Schneidelement (950) in dessen Wirkstellung auszufahren;
- einen neunten Sensor (S9), der an dem Schneidmechanismus (900) angebracht ist, um die ausgefahrene Arbeitsstellung der Schneidmittel (950) zu detektieren und die Rückkehr der Antriebsmittel (930) in die zurückgezogene, nicht-wirksame Stellung der Schneidmittel (950) zu steuern;
- Antriebsmittel (510) zum Ausfahren der ersten beweglichen Stütze, die zwischen der Grundstruktur (1) und der zweiten beweglichen Stütze (5) montiert sind, um letztere zu ihrer maximal ausgefahrenen Arbeitsstellung nach der Abkopplung der zweiten beweglichen Stütze (50) von den Antriebsmitteln (66) für die beweglichen Stützen zu bewegen;
- einen achtzehnten Sensor (S18, S7), der auf wenigstens einem der Teile vorgesehen ist, die von der Grundstruktur (1) und der zweiten beweglichen Stütze (50) festgelegt sind, um den Durchlauf der zweiten beweglichen Stütze (50) an einer ersten ausgefahrenen Arbeitsstellung nahe der maximal ausgefahrenen Arbeitsstellung zu detektieren und eine Abkopplung der zweiten Einspannmittel (521) von dem benachbarten Ende einer mit einem Überzug versehenen Matrixstange (10) nach Rückkehr der zweiten Einspannmittel (521) in deren zurückgezogene, nicht-wirksame Stellung zu bewirken und es dadurch zuzulassen, daß die Matrixstange (10) aus der Vorrichtung entfernt wird;
- Antriebsmittel (410, 510) zum Ausfahren der zweiten und dritten beweglichen Stütze, die zwischen der Grundstruktur (1) und den jeweiligen ersten und zweiten beweglichen Stützen (40, 50) montiert sind, um zu bewirken, daß die letzteren zu ihren jeweiligen nicht-wirksamen Ruhestellungen zurücklaufen, nachdem sie jeweils die maximal ausgefahrene Arbeitsstellung erreicht haben;
- einen einundzwanzigsten Sensor (S21), der auf der Grundstruktur (1) angebracht ist, um das Erreichen der maximal ausgefahrenen Arbeitsstellung durch die zweite bewegliche Stütze (50) zu detektieren und die Antriebsmittel (510) zum Ausfahren der dritten beweglichen Stütze zu aktivieren;
- einen zwölften Sensor (S12), der auf der Grundstruktur (1) angebracht ist, um das Vorhandensein der zweiten beweglichen Stütze (50) in deren nicht-wirksamer Ruhestellung zu detektieren und das Ausfahren der zweiten Einspannmittel (521) in deren maximal ausgefahrene Arbeitsstellung sowie das Ankoppeln der zweiten Einspannmittel (570) an den Antriebsmechanismus (66) für die beweglichen Stützen zu steuern;
- einen zweiten Sensor (S2, S6), der auf der zweiten beweglichen Stütze (50) angebracht ist, um das Ankoppeln der zweiten Einspannmittel (521) an das bereits mit einem Überzug versehene benachbarte Ende einer Matrixstange (10) zu detektieren und das Abkoppeln der ersten Einspannmittel (421) von dem nicht mit einem Überzug versehenen benachbarten Ende der Matrixstange (10) sowie der ersten Einspannmittel (70) von dem Antriebsmechanismus (66) für die beweglichen Stützen anzuweisen;
- einen fünften Sensor (S5), der auf der ersten beweglichen Stütze (40) angebracht ist, um das Abkoppeln der ersten Einspannmittel (421) von dem nicht mit einem Überzug versehenen benachbarten Ende einer Matrixstange (10) zu detektieren, den Rücklauf der ersten Einspannmittel (421) in deren zurückgezogene, nicht-wirksame Stellung zu steuern und die Antriebsmittel (410) für das Ausfahren der zweiten beweglichen Stütze zu aktivieren;
- einen fünfzehnten Sensor (S15), der an einem der Teile vorgesehen ist, die von der Grundstruktur (1) und der ersten beweglichen Stütze (40) festgelegt werden, um den Rücklauf der letzteren in deren nicht-wirksame Ruhestellung zu detektieren und die ersten Stangenpositioniermittel (620) zu veranlassen, daß sie in ihre Arbeitsstellung fahren, um eine neue Matrixstange (10) vor der ersten beweglichen Stütze (40) abzustützen.

2. Vorrichtung nach Anspruch 1, dadurch gekennzeichnet, daß die ersten Stangenpositioniermittel (620) zwischen einer nicht-wirksamen Stellung, die von dem Weg der ersten beweglichen Stütze (40) entfernt ist, und der Arbeitsstellung zum Stützen der Matrixstange (10) vor der ersten beweglichen Stütze (40) beweglich sind.

3. Vorrichtung nach Anspruch 2, dadurch gekennzeichnet, daß die nicht-wirksame Stellung der Positioniermittel (620) durch ein Zurückziehen der letzteren in Querrichtung relativ zur Grundstruktur (1) erreichbar ist, um individuell jede Matrixstange (10), die der Vorrichtung zugeführt werden soll, aufzunehmen.

4. Vorrichtung nach Anspruch 3, dadurch gekennzeichnet, daß die Stangenpositioniermittel (620) auf einer dritten beweglichen Plattform (630) befestigt sind, die nahe an der Grundstruktur (1) vorgesehen und zwischen der nicht-wirksamen Stellung und der Arbeitsstellung durch Betätigungsmittel (640) für die dritte Plattform beweglich ist.

5. Vorrichtung nach Anspruch 2, dadurch gekennzeichnet, daß der Stangenzuführmechanismus (600) ferner ein Magazin (610) aufweist, das nahe der Grundstruktur (1) montiert ist, um jede Matrixstange (10) aufzunehmen und sie individuell und durch Schwerkraft an die ersten Stangenpositioniermittel (20) abzugeben, wann immer die letzteren sich in ihrer nicht-wirksamen Stellung befinden.

6. Vorrichtung nach Anspruch 1, dadurch gekennzeichnet, daß die ersten und zweiten Einspannmittel (421, 521) auf einer ersten bzw. einer zweiten beweglichen Plattform (430, 530) montiert sind, wobei die Plattformen beweglich zwischen der ausgefahrenen Arbeitsstellung und der zurückgezogenen, nicht-wirksamen Stellung durch Aktivierung der entsprechenden Plattform-Betätigungsmittel (440, 540), die zwischen diesen Plattformen und den entsprechenden ersten und zweiten beweglichen Stützen (40, 50) montiert sind, beweglich sind.

7. Vorrichtung nach Anspruch 6, dadurch gekennzeichnet, daß der dritte Sensor (S3) auf einem Stützarm (423), der an der ersten beweglichen Plattform (430) befestigt ist, montiert ist.

8. Vorrichtung nach Anspruch 6, dadurch gekennzeichnet, daß die ersten und zweiten Einspannmittel (421, 521) in Form von Spannbacken ausgebildet sind, die eine Arbeitsbedingung zur Stangenhalterung und eine Ruhebedingung zur Stangenfreigabe einnehmen können, wobei die Arbeitsbedingungen durch Betätigung entsprechender erster und zweiter Backen-Steuermittel (422, 522) erreicht werden, die auf den entsprechenden ersten und zweiten beweglichen Plattformen (430, 530) montiert sind.

9. Vorrichtung nach Anspruch 8, dadurch gekennzeichnet, daß die Bedingung geschlossene Backe bzw. offene Backe durch Anweisung von dem ersten Sensor (S1) bzw. dem zweiten Sensor (S2) erhalten wird.

10. Vorrichtung nach Anspruch 9, dadurch gekennzeichnet, daß die geschlossene Bedingung der ersten und zweiten Spannbacken (421, 521) jeweils durch den vierten bzw. sechsten Sensor (S4, S6) detektiert wird, wobei jeder Sensor entsprechenden Backen-Steuermitteln (422, 522) benachbart angebracht ist.

11. Vorrichtung nach Anspruch 9, dadurch gekennzeichnet, daß die Bedingung offener Backen der ersten und zweiten Spannbacken (421, 521) jeweils durch den fünften bzw. siebten Sensor (S5, S7) detektiert wird, wobei jeder Sensor benachbart entsprechenden Backen-Steuermitteln (422, 522) angebracht ist.

12. Vorrichtung nach Anspruch 1, dadurch gekennzeichnet, daß die Antriebsmittel (510) für die erste und dritte bewegliche Stütze durch Antriebsmittel für eine zweite bewegliche Stütze bestimmt werden.

13. Vorrichtung nach Anspruch 12, dadurch gekennzeichnet, daß die Antriebsmittel (510) für die zweite bewegliche Stütze wahlweise die zweite bewegliche Stütze (50) in deren zurückgezogene Ruhestellung und in deren ausgefahrene Arbeitsstellung verbringen.

14. Vorrichtung nach Anspruch 1, dadurch gekennzeichnet, daß die Antriebsmittel (930) auf einer sechsten beweglichen Plattform (910), die zwischen der nicht-wirksamen Ruhestellung und der ausgefahrenen Arbeitsstellung parallel zur Grundstruktur (1) beweglich ist, um der Längsbewegung der Matrixstangen (10), die mit einer Umhüllung versehen werden, folgen zu können.

15. Vorrichtung nach Anspruch 14, dadurch gekennzeichnet, daß die Antriebsmittel (930) in Form eines siebten beweglichen Plattform ausgebildet sind, die rechtwinkelig zu der Grundstruktur (1) zwischen der zurückgezogenen, nicht-wirksamen Stellung und der ausgefahrenen Arbeitsstellung der Schneidmittel (950) unter Einwirkung entsprechender Betätigungsmittel (960) für die siebte Plattform gleiten kann, die zwischen diesen Schneidmitteln und der Grundstruktur (1) angeordnet sind.

16. Vorrichtung nach Anspruch 15, dadurch gekennzeichnet, daß die Längsbewegung dieser sechsten beweglichen Plattform (910) durch deren Ankopplung an den Antriebsmechanismus (66) für die beweglichen Stützen mittels entsprechender dritter Kupplungsmittel (970) erreichbar ist.

17. Vorrichtung nach Anspruch 15, dadurch gekennzeichnet, daß die ersten, zweiten und dritten Kupplungsmittel (470, 570, 970) Kupplungen umfassen, die jeweils auf der ersten und zweiten beweglichen Stütze (40, 50) und an dem Schneidmechanismus (900) befestigt sind, um diese an den Antriebsmechanismus (66) für die beweglichen Stützen anzukoppeln.

18. Vorrichtung nach Anspruch 16, dadurch gekennzeichnet, daß jede Kupplung einen Zahnkranz an die erste, zweite bzw. sechste bewegliche Plattform (430, 530, 910) ankoppelt, wobei jeder Zahnkranz (471, 571, 971) sich in konstantem Eingriff mit dem Antriebsmechanismus (66) für die beweglichen Stützen befindet.

19. Vorrichtung nach Anspruch 18, dadurch gekennzeichnet, daß der Antriebsmechanismus (66) für die beweglichen Stützen eine Antriebskette ist, die betätigbar ist durch ein erstes Motoruntersetzungsgetriebe (60) über Zahnkränze (64, 65), die an den Enden der Grundstruktur (1) angebracht sind.

20. Vorrichtung nach Anspruch 1, dadurch gekennzeichnet, daß die Grundstruktur (1) eine zweite feste Stütze (20) trägt, die dem Schneidmechanismus (900) benachbart vorgesehen ist, um das freie, mit einem Überzug versehene Ende einer Matrixstange (10) abzustützen, die an ihrem entgegengesetzten Ende an der beweglichen Stütze (50) befestigt ist.

21. Vorrichtung nach Anspruch 20, dadurch gekennzeichnet, daß die Grundstruktur (1) ferner eine dritte feste Stütze (20) aufweist, die zwischen dem Mechanismus (800) zum Aufbringen des Überzugs und dem Schneidmechanismus (900) vorgesehen ist, um für den Schneidevorgang die gegenseitig ausgerichteten, mit einem Überzug versehenen Enden zweier aufeinanderfolgender Matrixstangen (10) abzustützen und zu führen.

22. Vorrichtung nach Anspruch 1, dadurch gekennzeichnet, daß die Wärmequelle (820) automatisch und in Winkelrichtung zwischen einer nicht-wirksamen Stellung, entfernt von der Achse der Stange, die mit einem Überzug versehen wird, und einer Arbeitsstellung benachbart dieser Achse beweglich ist durch Einwirkung von Betätigungsmitteln (830) für die sechste Plattform, die am unteren Abschnitt der Grundstruktur (1) montiert sind.

23. Vorrichtung nach Anspruch 1, dadurch gekennzeichnet, daß ein zehnter Anwesenheits-Sensor (S10) benachbart den Betätigungsmitteln (960) für die siebte Plattform vorgesehen ist, um das Zurückziehen der Schneidmittel (950) in deren nicht-wirksame Stellung festzustellen und den Rücklauf des Schneidmechanismus (900) in dessen zurückgezogene, nicht-wirksame Stellung zu steuern, um ferner die Ankopplung der zweiten beweglichen Stütze (50) an den Antriebsmechanismus (66) für die beweglichen Stützen zu deaktivieren und die Antriebsmittel (510) für die erste bewegliche Stütze zu aktivieren, um die zweite bewegliche Stütze (50) zu deren maximal ausgefahrener Stellung zu bringen.

24. Vorrichtung nach Anspruch 1, dadurch gekennzeichnet, daß sie noch folgendes umfaßt:
- einen Stangenentfernmechanismus (700) mit zweiten Stangenpositioniermitteln (720), der eine bereits mit einem Überzug versehene Matrixstange (10) von der zweiten beweglichen Stütze (50) an einer ersten Stangenaufnahme-Arbeitsstellung aufnimmt und eine nicht-wirksame Ruhestellung aufweist;
- einen siebzehnten Sensor (S17), der an der Grundstruktur (1) vorgesehen ist, um den Durchlauf der zweiten beweglichen Stütze (50) durch den Schneidmechanismus (900) zu detektieren und den Vorlauf der zweiten Stangenpositioniermittel (720) zu der ersten Stangenaufnahme-Arbeitsstellung zu steuern;
- einen neunzehnten Sensor (S19, S20), der in wenigstens einem der Teile vorgesehen ist, die von der Grundstruktur (1) und der zweiten beweglichen Stütze (50) festgelegt werden, um die Ankunft der letzteren in deren erster ausgefahrener Arbeitsstellung und die Ankunft der zweiten Stangenpositioniermittel in deren erster Stangenentfern-Arbeitsstellung zu detektieren;
- einen zwanzigsten Sensor (S20), der an dem Stangenentfernmechanismus (700) angebracht ist, um den Vorlauf der zweiten Positioniermittel (720) zumindest zur ersten Stangenaufnahme-Arbeitsstellung zu detektieren und den Rücklauf der Positioniermittel (720) zu der nicht-wirksamen Ruhestellung zu steuern;
- einen dreiundzwanzigsten Sensor (S23), der an dem Stangenentfernmechanismus (700) angebracht ist, um den Rücklauf der zweiten Stangenpositioniermittel (720) in die nicht-wirksame Ruhestellung zu detektieren und zusammen mit dem einundzwanzigsten Sensor (S21) die Antriebsmittel (510) für den Vorlauf der dritten beweglichen Stütze zu aktivieren.

25. Vorrichtung nach Anspruch 24, dadurch gekennzeichnet, daß der Stangenentfernmechanismus (700) in der Nähe eines Abschnitts der Grundstruktur (1) montiert ist, in dem die zweite bewegliche Stütze (50) in ihrer ersten ausgefahrenen Arbeitsstellung vorgesehen ist.

26. Vorrichtung nach Anspruch 25, dadurch gekennzeichnet, daß in der Stangenaufnahme-Arbeitsstellung die zweiten Stangenpositioniermittel (720) wahlweise, automatisch, individuell und durch Schwerkraft jede Matrixstange (10) von der zweiten beweglichen Stütze (50) aufnehmen, um diese Stange zu einem Stangenlager (770) zu überführen, das nahe an der Grundstruktur (1) montiert und mit den zweiten Stangenpositioniermitteln (720) in Ausrichtung angeordnet ist.

27. Vorrichtung nach Anspruch 26, dadurch gekennzeichnet, daß die zweiten Stangenpositioniermittel (720) eine zweite maximale Ausfahr-Arbeitsstellung aufweisen, in der sie jede Matrixstange (10) aus der Ausrichtung zwischen den ersten und den zweiten Einspannmitteln (421, 521) hinausbewegen, um diese Matrixstangen (10) dem Stangenlager (770) zuzuführen.

28. Vorrichtung nach Anspruch 27, dadurch gekennzeichnet, daß die Bewegung der zweiten Stangenpositioniermittel (720) zu und aus deren nicht-wirksamer Ruhestellung durch die Bewegung einer vierten beweglichen Plattform (730), rechtwinkelig zur Längsbewegung einer Matrixstange auf der Grundstruktur (1), erreicht wird.

29. Vorrichtung nach Anspruch 28, dadurch gekennzeichnet, daß die nicht-wirksame Ruhestellung und die ausgefahrene Arbeitsstellung der vierten Plattform (730) durch Einwirkung von Betätigungsmitteln (740) für die vierte Plattform erreicht wird, die der Grundstruktur (1) benachbart montiert sind.

30. Vorrichtung nach Anspruch 29, dadurch gekennzeichnet, daß die ersten und zweiten Stangenpositioniermittel (620, 720) in Form von Haltegabeln ausgebildet sind, deren freie Enden mit ersten bzw. zweiten Endausnehmungen (623, 723) zur individuellen Aufnahme und Halterung jeder Matrixstange (10) versehen sind.

31. Vorrichtung nach Anspruch 30, dadurch gekennzeichnet, daß die vierte bewegliche Plattform (730) auf einer fünften beweglichen Plattform (736) befestigt ist, um die Bewegung der zweiten Positioniermittel (720) zu und aus deren maximal ausgefahrener Arbeitsstellung zu fördern.

32. Vorrichtung nach Anspruch 31, dadurch gekennzeichnet, daß die Bewegung zu und aus der maximal ausgefahrenen Arbeitsstellung der fünften beweglichen Plattform (736) durch Einwirkung von Betätigungsmitteln (760) für die fünfte Plattform, die nahe der Grundstruktur (1) montiert sind, erreichbar ist.

33. Verfahren zur Herstellung von Farbrollern, bei dem ein Überzugsband (812) schraubenförmig auf einer zylindrischen, rohrförmigen Matrixstange (10) aufgebracht wird, indem letztere auf einem Gerät zum Aufbringen eines Stangenüberzugs gedreht wird, dadurch gekennzeichnet, daß das Verfahren die folgenden Schritte aufweist:
a- Positionieren einer ersten Matrixstange am Gerät zum Aufbringen eines Stangenüberzugs in einer Längs-Arbeitsrichtung zum Aufbringen des Überzugs;
b- Detektieren des Positionierens der ersten Matrixstange in dieser Längs-Arbeitsrichtung und Aufbringen einer Axialbewegung auf die Matrixstange in einer Arbeitsrichtung zum Aufbringen des Überzugs mit einer ersten konstanten Geschwindigkeit und einer vorgegebenen Umdrehung;
c- Detektieren des Beginns der axialen Bewegung und Aufbringen einer ersten konstanten Axialgeschwindigkeit auf die Matrixstange während einer bestimmten Zeit bei Einwirken dieser Axial- und Drehbewegungen;
d- Detektieren der Ankunft eines ersten Matrixstangenendes, das bei einer bestimmten Position seiner Axialbewegung der Arbeitsrichtung zum Überziehen zugewandt ist, und oberflächliches Heizen der Matrixstange von diesem ersten Ende aus, während sich die Matrixstange bei der ersten konstanten Geschwindigkeit nach der Beschleunigung bewegt;
e- Einleiten des kontinuierlichen Überziehens der Matrixstange von diesem ersten Ende aus nach ihrem oberflächlichen Heizen und unter Verdrehung;
f- Positionieren einer zweiten Matrixstange in der Arbeits-Längsrichtung zum Überziehen, wenn die erste Matrixstange bei ihrer axialen Bewegung eine Position erreicht hat, die ausreicht, um das Positionieren der zweiten Matrixstange auf dem Gerät zum Aufbringen des Überzugs zuzulassen;
g- Ausführen des weiter oben beschriebenen Schrittes "b" an der zweiten Matrixstange;
h- Detektieren des Beginns der Axialbewegung der zweiten Matrixstange und Durchführung der ersten Beschleunigung an dieser, während die Axialbewegung stattfindet, wobei die Beschleunigung ausreichend und notwendig für den Eingriff des ersten Stangenendes mit einem zweiten Ende der ersten Matrixstange, die mit einem Überzug versehen wird, ist;
i- Durchführung der weiter oben beschriebenen Schritte "d" und "e" an der zweiten Matrixstange, während deren erstes Ende mit dem zweiten Ende der ersten Matrixstange in Eingriff gehalten wird;
j- Abschneiden des Überzugsbandes im Bereich des Eingriffs zwischen der ersten und der zweiten Matrixstange, entlang einer Ebene senkrecht zur Arbeitsrichtung zum Überziehen;
k- Detektieren des Endes des Schneidvorgangs am Überzugsband und Aufbringen einer zweiten konstanten Axialbeschleunigung auf die erste Matrixstange in der Arbeitsrichtung der Bewegung und während einer bestimmten Zeit, die ausreicht, um die axiale Trennung der nebeneinander befindlichen Enden zweier aufeinanderfolgender Matrixstangen zu erreichen;
l- Detektieren einer Position der ersten, von der zweiten Matrixstange entfernten Matrixstange und Entfernen der ersten, mit einem Überzug versehenen Matrixstange aus dem Gerät zum Aufbringen des Überzugs;
m- Wiederholung der Schritte "j" bis "l" für die nachfolgenden Stangen.

34. Verfahren nach Anspruch 33, dadurch gekennzeichnet, daß der Schritt des Positionierens der ersten Matrixstange (10) in Längs-Arbeitsrichtung den Schritt eines automatischen, individuellen und nacheinander ausgeführten Bewegens jeder Matrixstange (10) von einer Position außerhalb des Gerätes zum Aufbringen des Überzugs in die Stellung in Arbeits-Längsrichtung zum Überziehen umfaßt.

35. Verfahren nach Anspruch 34, dadurch gekennzeichnet, daß jede Matrixstange (10) nacheinander und individuell durch Schwerkraft zu ihrer Position außerhalb des Gerätes zum Aufbringen des Überzugs gebracht wird.

36. Verfahren nach Anspruch 33, dadurch gekennzeichnet, daß jede Matrixstange (10) axial durch Anwendung einer Axialkraft auf ihr zweites Ende bewegt wird, bis ihr erstes Ende vollständig mit einem Überzug versehen ist, wobei diese Bewegung anschließend durch Aufbringen eines axialen Zuges auf das erste Ende durchgeführt wird.

37. Verfahren nach Anspruch 33, dadurch gekennzeichnet, daß die erste axiale Beschleunigung durch Einwirkung einer Axialkraft auf das zweite Ende jeder Matrixstange (10) erreicht wird, wobei die zweite Axialkraft erhalten wird durch Anwendung eines axialen Zuges auf das erste Ende der Matrixstange (10).

38. Verfahren nach Anspruch 33, dadurch gekennzeichnet, daß der Schritt des Entfernens jeder Matrixstange (10) aus dem Apparat zum Aufbringen eines Überzugs den Schritt der automatischen, individuellen und sequentiellen Bewegung jeder Matrixstange (10) von einer Stellung innerhalb des Apparats zum Aufbringen eines Überzugs in Arbeits-Längsrichtung des Überziehens bis zu einer externen Stangenentfern-Stellung umfaßt.

## Revendications

1. Appareil pour la fabrication de rouleaux à peinture du type qui permet l'enroulement hélicoïdal et la fixation d'une bande de couverture (812) autour d'un bâton de matrice cylindrique (10), ledit appareil comprenant : une structure de base allongée (1); des premier et second supports mobiles (40, 50), qui sont adaptés à être déplacés sur la structure de base (1), entre une position inopérante de repos et une position opérante d'avance maximale, et qui comprennent, respectivement, des premier et second moyens de préhension (421, 521), qui sont adaptés à être engagés, sans aucun mouvement de rotation relatif, avec une extrémité adjacente du bâton de matrice (10) et avec un mécanisme (450, 550) pour entraîner en rotation ledit bâton de matrice; séquentiellement, sur la structure de base (1), sont disposés un premier support fixe (20), après la position opérante d'avance maximale dudit premier support mobile (40); une source de chaleur (820), qui fait fondre superficiellement la portion adjacente dudit bâton de matrice (10), un mécanisme de distribution de bande de couverture (800) et un mécanisme de coupe (900) qui coupe ladite bande de couverture (812) entre deux bâtons de matrice consécutifs (10); un mécanisme propulseur de support mobile (66); et des premier et deuxième moyens d'engagement (470, 570), qui engagent respectvement et sélectivement lesdits premier et second supports mobiles (40, 50) avec le mécanisme propulseur de support mobile (66), afin d'amener chaque support mobile à se déplacer depuis la position inopérante de repos vers la position opérante d'avance maximale, ledit appareil étant caractérisé en ce qu'il comprend, en outre, :
- les premier et second supports mobiles (40, 50), supportant respectivement sur eux, les premier et second moyens de préhension (421, 521), qui sont adaptés à être déplacés entre une position inopérante rétractée et une position opérante avancée, et des premier et second moyens propulseurs de moyen de préhension (430, 530), déplaçant les moyens de préhension respectifs (421, 521) entre ladite position inopérante rétractée et ladite position opérante avancée;
- un dispositif de distribution de bâton (600), comprenant un premier moyen de positionnement de bâton (620), qui positionne un bâton de matrice (10) devant le premier support mobile (40), à sa position inopérante de repos, en alignement longitudinal avec les premier et second moyens de préhension (421, 521);
- un onzième capteur (S11), adapté à détecter la présence d'un bâton de matrice (10) au moyen de positionnement (620), et à actionner le premier moyen d'engagement (470), par engagement du premier support mobile (40) avec le mécanisme propulseur de support mobile (66);
- un premier moyen de capteur (S1, S4), situé au premier support mobile (40), afin de détecter l'accouplement entre le premier moyen de préhension (421) et l'extrémité adjacente du bâton de matrice (10), sur le premier moyen de positionnement de bâton (620), et de donner une instruction au premier moyen propulseur de moyen de préhension (430) pour qu'il se déplace jusqu'à sa position opérante avancée;
- un troisième capteur (S3), monté sur l'un ou l'autre des premier et second supports mobiles (40, 50), afin de détecter l'accouplement de l'extrémité libre d'un bâton de matrice non couvert (10), à l'une des parties définies par l'extrémité libre d'un autre bâton de matrice consécutif (10) étant couvert et par le second moyen de préhension (521), et afin d'interrompre l'avance du premier moyen de préhension (421) à sa position opérante avancée, chaque bâton de matrice (10) ayant ses extrémités dotées d'un moyen d'accouplement, afin de permettre l'engagement, sans mouvements rotatifs et axiaux relatifs, avec l'extrémité libre d'un autre bâton de matrice consécutif (10);
- le mécanisme de coupe (900) étant doté d'un moyen de coupe (950) monté sur la structure de base (1), de manière à être adapté à être déplacé entre une position inopérante rétractée et une position opérante avancée relativement au bâton de matrice couvert (10), afin de couper la bande de couverture (812) à la zone de jonction de deux bâtons de matrice consécutifs (10), selon un plan perpendiculaire à l'axe desdits bâtons de matrice (10), le déplacement dudit moyen de coupe (950) pouvant être obtenu va un moyen propulseur (66, 930), monté entre la structure de base (1) et le moyen de coupe (950);
- un huitième capteur (S8), situé sur la structure de base (1), afin de détecter le passage de l'extrémité libre du bâton de matrice non couvert (10) via le mécanisme de distribution de bande de couverture (800), en fonction du positionnement relatif de l'un ou l'autre des premier et second supports mobiles (40, 50) et de la structure de base (1), et de commander l'actionnement du moyen propulseur (66, 930), afin d'amener le moyen de coupe (950) à avancer jusqu'à sa position opérante;
- un neuvième capteur (S9), situé au mécanisme de coupe (900), afin de détecter la position opérante avancée du moyen de coupe (950), et de commander le retour du moyen propulseur (930) jusqu'à la position inopérante rétractée du moyen de coupe (950);
- un premier moyen propulseur d'avance de support mobile (510), monté entre la structure de base (1) et le second support mobile (50), afin de déplacer ce dernier jusqu'à sa position opérante d'avance maximale, au moment du dégagement dudit second support mobile (50) du mécanisme propulseur de support mobile (66);
- un dix-huitième capteur (S18, S7), situé dans au moins l'une des parties définies par la structure de base (1) et le second support mobile (50), afin de détecter le passage du second support mobile (50) à une première position opérante avancée proche de la position opérante d'avance maximale, et de provoquer le dégagement du second moyen de préhension (521) de l'extrémité adjacente d'un bâton de matrice couvert (10), au moment du retour du second moyen de préhension (521) jusqu'à la position inopérante rétractée, ce qui permet au bâton de matrice (10) d'être extrait dudit appareil;
- des deuxième et troisième moyens propulseurs d'avance de support mobile (410, 510), montés entre la structure de base (1) et les premier et second supports mobiles respectifs (40, 50), afin d'amener ces derniers à regagner leur position inopérante de repos respective, une fois qu'ils ont atteint la position opérante d'avance maximale respective;
- un vingt-et-unième capteur (S21), monté sur la structure de base (1), afin de détecter l'arrivée du second support mobile (50) à la position opérante d'avance maximale, et d'actionner le troisième moyen propulseur d'avance de support mobile (510);
- un douzième capteur (S12), situé sur la structure de base, afin de détecter la présence du second support mobile (50), à la position inopérante de repos, et de commander l'avance du second moyen de préhension (521) jusqu'à la position opérante d'avance maximale, ainsi que l'engagement du second moyen d'engagement (570) avec le mécanisme propulseur de support mobile (66);
- un deuxième capteur (S2, S6), situé sur le second support mobile (50), afin de détecter l'accouplement entre le second moyen de préhension (521) et l'extrémité adjacente déjà couverte d'un bâton de matrice (10), et de donner une instruction de dégagement du premier moyen de préhension (421) de l'extrémité adjacente non couverte du bâton de matrice (10), et du premier moyen d'engagement (470) du mécanisme propulseur de support mobile (66);
- un cinquième capteur (S5), situé sur le premier support mobile (50), afin de détecter le dégagement du premier moyen de préhenson (421) de l'extrémité adjacente non couverte du bâton de matrice (10), de commander le retour du premier moyen de préhension (421) jusqu'à la position inopérante rétractée, et d'actionner le deuxième moyen propulseur d'avance de support mobile (410);
- un quinzième capteur (S15), situé à l'une des parties définies par la structure de base (1) et le premier support mobile (40), afin de détecter le retour de ce dernier jusqu'à la position inopérante de repos, et de donner une instruction au premier moyen de positionnement de bâton (620) pour qu'il se déplace jusqu'à sa position opérante, afin de supporter un nouveau bâton de matrice (10) devant le premier support mobile (40).

2. Appareil, selon la revendication 1, caractérisé en ce que le premier moyen de positionnement de bâton (620) est adapté à être déplacé entre une position inopérante, loin de la trajectoire du premier support mobile (40), et la position opérante de support du bâton de matrice (10) devant le premier support mobile (40).

3. Appareil, selon la revendication 2, caractérisé en ce que la position inopérante du moyen de positionnement (620) peut être obtenue par une rétraction transversale de ce dernier, relativement à la structure de base (1), pour recevoir individuellement chaque bâton de matrice (10) devant être distribué à l'appareil.

4. Appareil, selon la revendication 3, caractérisé en ce que le moyen de positionnement de bâton (620) est monté sur une troisième plate-forme mobile (630), qui est disposée près de la structure de base (1) et qui est adaptée à être déplacée entre les positions opérante et inopérante par un moyen d'actionnement de troisième plate-forme (640).

5. Appareil, selon la revendication 2, caractérisé en ce que le dispositif de distribution de bâton (600) comprend, en outre, un magasin (610), monté près de la structure de base (1), afin de stocker et de libérer, individuellement et par gravité, chaque bâton de matrice (10) jusqu'au premier moyen de positionnement de bâton (620), dès que ce dernier se trouve dans sa position inopérante.

6. Appareil, selon la revendication 1, caractérisé en ce que les premier et second moyens de préhension (421, 521) sont montés, respectivement, sur des première et seconde plates-formes mobiles (430, 530), qui sont adaptées à être déplacées entre la position opérante avancée et la position inopérante rétractée, par l'actionnement de moyens d'actionnement de plate-forme respectifs (440, 540), montés entre lesdites plates-formes et les premier et second supports mobiles respectifs (40, 50).

7. Appareil, selon la revendication 6, caractérisé en ce que le troisième capteur (S3) est monté sur un bras de support (423), fixé à la première plate-forme mobile (430).

8. Appareil, selon la revendication 6, caractérisé en ce que les premier et second moyens de préhension (421, 521) ont la forme de mâchoires de préhension, se présentant dans une condition opérante de retenue de bâton et une condition inopérante de libération de bâton, lesdites conditions opérantes étant obtenues par l'action de premier et second moyens de commande de mâchoire respectifs (422, 522), montés sur les première et seconde plates-formes mobiles respectives (430, 530).

9. Appareil, selon la revendication 8, caractérisé en ce que les conditions ouverte et fermée des mâchoires sont obtenues, respectivement, par instruction en provenance du premier capteur (S1) et du deuxième capteur (S2).

10. Appareil, selon la revendication 9, caractérisé en ce que la condition fermée des première et seconde mâchoires de préhenson (421, 521) est détectée, respectivement, par les quatrième et sixième capteurs (S4, S6), chaque capteur étant monté adjacent à un moyen de commande de mâchoire respectif (422, 522).

11. Appareil, selon la revendication 9, caractérisé en ce que la condition ouverte des première et seconde mâchoires de préhension (421, 521) est détectée, respectivement, par les cinquième et septième capteurs (S5, S7), chaque capteur étant monté adjacent à un moyen de commande de mâchoire respectif (422, 522).

12. Appareil, selon la revendication 1, caractérisé en ce que les premier et troisième moyens propulseurs de support mobile (510) sont définis par un deuxième moyen propulseur de support mobile.

13. Appareil, selon la revendication 12, caractérisé en ce que le deuxième moyen propulseur de support mobile (510) amène sélectivement le second support mobile (50) vers la position inopérante rétractée de repos et la position opérante avancée.

14. Appareil, selon la revendication 1, caractérisé en ce que le moyen propulseur (930) est monté sur une sixième plate-forme mobile (910), qui est adaptée à être déplacée entre la position inopérante de repos et la position opérante avancée, parallèlement à la structure de base (1), afin de suivre le déplacement longitudinal des bâtons de matrice (10) étant couverts.

15. Appareil, selon la revendication 14, caractérisé en ce que le moyen propulseur (930) a la forme d'une septième plate-forme mobile, qui glisse perpendiculairement à la structure de base (1), entre la position inopérante rétractée et la position opérante avancée du moyen de coupe (950), par l'action d'un moyen d'actionnement de septième plate-forme correspondant (960), monté entre ledit moyen de coupe (950) et la structure de base (1).

16. Appareil, selon la revendication 15, caractérisé en ce que le déplacement longitudinal de ladite sixième plate-forme mobile (910) peut être obtenu par son engagement avec le mécanisme propulseur de support mobile (66), via un troisième moyen d'engagement respectif (970).

17. Appareil, selon la revendication 15, caractérisé en ce que les premier, deuxième et troisième moyens d'engagement (470, 570, 970) comprennent des embrayages, qui sont respectivement montés sur les premier et second supports mobiles (40, 50) et sur le mécanisme de coupe (900), afin de les engager avec le mécanisme propulseur de support mobile (66).

18. Appareil, selon la revendication 16, caractérisé en ce que chaque embrayage engage une roue dentée avec les première, deuxième et sixième plates-formes mobiles (430, 530, 910), respectvement, chaque roue dentée (471, 571, 971) étant en engagement constant avec le mécanisme propulseur de support mobile (66).

19. Appareil, selon la revendication 18, caractérisé en ce que le mécanisme propulseur de support mobile (66) est une chaîne d'entraînement, qui est adaptée à être actionnée par un premier moto-réducteur (60) via des roues dentées (64, 65) montées aux extrémités de la structure de base (1).

20. Appareil, selon la revendication 1, caractérisé en ce que la structure de base (1) supporte un deuxième support fixe (20), adjacent au mécanisme de coupe (900), afin de supporter l'extrémité couverte libre d'un bâton de matrice (10), qui est fixé à son extrémité opposée au support mobile (50).

21. Appareil, selon la revendication 20, caractérisé en ce que la structure de base (1) supporte, en outre, un troisième support fixe (20), disposé entre le mécanisme de distribution de bande (800) et le mécanisme de coupe (900), afin de supporter et de diriger, pour l'opération de coupe, les extrémités couvertes mutuellement engagées de deux bâtons de matrice consécutifs (10).

22. Appareil, selon la revendication 1, caractérisé en ce que la source de chaleur (820) est adaptée à être déplacée automatiquement et angulairement entre une position inopérante, éloignée de l'axe des bâtons en train d'être couverts, et une position opérante, adjacente audit axe des bâtons, par l'action d'un moyen d'actionnement de sixième plate-forme (830), qui est monté à la portion inférieure de la structure de base (1).

23. Appareil, selon la revendication 1, caractérisé en ce qu'un dixième capteur de présence (S10) est adjacent au moyen d'actionnement de septième plate-forme (960), afin de détecter la rétraction du moyen de coupe (950) jusqu'à sa position inopérante et de commander le retour du mécanisme de coupe (900) jusqu'à sa position inopérante rétractée, de manière à supprimer l'engagement du second support mobile (50) avec le mécanisme propulseur de support mobile (66) et actionner le premier moyen propulseur de support mobile (510), pour amener ledit second support mobile (50) jusqu'à sa position d'avance maximale.

24. Appareil, selon la revendication 1, caractérisé en ce qu'il comprend, en outre, :
- un mécanisme d'extraction de bâton (700), comprenant un second moyen de positionnement de bâton (720), qui reçoit un bâton de matrice déjà couvert (10) du second support mobile (50) à une première position opérante de réception de bâton et qui présente une position inopérante de repos;
- un dix-septième capteur (S17), disposé à la structure de base (1), afin de détecter le passage du second support mobile (50) va le mécanisme de coupe (900) et de commander l'avance du second moyen de positionnement de bâton (720) vers la première position opérante de réception de bâton;
- un dix-neuvième capteur (S19, S20), disposé dans au moins l'une des parties définies par la structure de base et le second support mobile (50), afin de détecter l'arrivée de ce dernier jusqu'à sa première position opérante avancée, et de détecter l'avance du second moyen de positionnement de bâton jusqu'à sa première position opérante d'extraction de bâton.
- un vingtième capteur (S20), disposé au mécanisme d'extraction de bâton (700), afin de détecter l'avance du second moyen de positionnement (720), au moins vers la première position opérante de réception de bâton, et de commander le retour du moyen de positionnement (720) jusqu'à la position inopérante de repos;
- un vingt-troisième capteur (S23), disposé au mécanisme d'extraction de bâton (700), afin de détecter le retour du second moyen de positionnement de bâton (720) jusqu'à la position inopérante de repos, et d'actionner, conjointement au vingt-et-unième capteur (S21) le troisième moyen propulseur d'avance de support mobile (510).

25. Appareil, selon la revendication 24, caractérisé en ce que ledit mécanisme d'extraction de bâton (700) est monté près d'une portion de la structure de base (1), dans laquelle est situé le second support mobile (50) dans sa première position opérante avancée.

26. Appareil, selon la revendication 25, caractérisé en ce qu'à ladite position opérante de réception de bâton, le second moyen de positionnement de bâton (720) reçoit sélectivement, automatiquement, individuellement et par gravité, chaque bâton de matrice (10) du second support mobile (50), afin de distribuer ledit bâton à un dispositif de stockage de bâtons (770), monté près de la structure de base (1), qui est aligné avec le second moyen de positionnement de bâton (720).

27. Appareil, selon la revendication 26, caractérisé en ce que le second moyen de positionnement de bâton (720) présente une seconde position opérante d'avance maximale, dans laquelle il déplace chaque bâton de matrice (10) au-delà de l'alignement entre les premier et second moyens de préhension (421, 521), afin de distribuer lesdits bâtons de matrice (10) au dispositif de stockage de bâtons (770).

28. Appareil, selon la revendication 27, caractérisé en ce que le déplacement du second moyen de positionnement de bâton (720) en va-et-vient depuis sa position inopérante de repos est obtenu par le déplacement d'une quatrième plate-forme mobile (730), perpendiculairement au déplacement longitudinal d'un bâton de matrice à la structure de base (1).

29. Appareil, selon la revendication 28, caractérisé en ce que la position inopérante de repos et la position opérante avancée de la quatrième plate-forme (730) peuvent être obtenues par l'action d'un moyen d'actionnement de quatrième plate-forme (740), monté adjacent à la structure de base (1).

30. Appareil, selon la revendication 29, caractérisé en ce que les premier et second moyens de positionnement de bâton (620, 720) se présentent sous la forme de fourches de retenue, dont les extrémités libres sont dotées d'un premier et d'un second évidement d'extrémité (623, 723), respectivement, pour recevoir et retenir individuellement chaque bâton de matrice (10).

31. Appareil, selon la revendication 30, caractérisé en ce que la quatrième plate-forme (730) est montée sur une cinquième plate-forme mobile (736), afin de faciliter le déplacement du second moyen de positionnement (720) en va-et-vient depuis sa position opérante d'avance maximale.

32. Appareil, selon la revendication 31, caractérisé en ce que ledit déplacement en va-et-vient depuis la position opérante d'avance maximale de la cinquième plate-forme mobile (736) peut être obtenu par l'action d'un moyen d'actionnement de cinquième plate-forme (760), monté près de la structure de base (1).

33. Procédé pour la fabrication de rouleaux à peinture, dans lequel une bande de couverture (812) est fixée en une hélice à un bâton de matrice tubulaire cylindrique (10), par rotation de ce dernier sur un appareil de couverture de bâton, caractérisé en ce qu'il comprend les phases consistant à :
a- positionner un premier bâton de matrice dans une direction longitudinale opérante de couverture sur l'appareil de couverture de bâton;
b- détecter le positionnement du premier bâton de matrice à ladite direction longitudinale opérante et soumettre ledit bâton de matrice à un déplacement axial dans une direction opérante de couverture, à une première vitesse constante et une rotation prédéterminée;
c- détecter le commencement du déplacement axial et soumettre le bâton de matrice à un premier déplacement axial constant, durant un certain temps au cours desdits mouvements axial et de rotation;
d- détecter l'arrivée d'une première extrémité de bâton de matrice, qui donne dans la direction opérante de couverture, à une position déterminée de son déplacement axial, et chauffer superficiellement le bâton de matrice, depuis ladite première extrémité, tandis que ledit bâton de matrice se déplace à ladite première vitesse constante après l'accélération;
e- commencer la couverture continue du bâton de matrice en rotation, depuis ladite première extrémité, après son chauffage superficiel;
f- positionner un second bâton de matrice à la direction longitudinale opérante de couverture, lorsque le premier bâton de matrice atteint une position, dans son déplacement axial, suffisante pour permettre ledit positionnement du second bâton de matrice sur l'appareil de couverture;
g- soumettre le second bâton de matrice à la phase "b" précitée;
h- détecter le commencement du déplacement axial du second bâton de matrice et soumettre celui-ci à la première accélération, tandis que le déplacement axial a lieu, ladite accélération étant suffisante et nécessaire pour engager la première extrémité de bâton avec une seconde extrémité du premier bâton de matrice étant couvert;
i- soumettre le second bâton de matrice aux phases "d" et "e" précitées, tout en maintenant sa première extrémité engagée avec la seconde extrémité du premier bâton de matrice;
j- couper la bande de couverture, à la zone d'engagement entre les premier et second bâtons de matrice, selon un plan perpendiculaire à la direction opérante de couverture;
k- détecter la fin de l'opération de coupe de la bande de couverture, et soumettre le premier bâton de matrice à une seconde accélération constante axiale, dans la direction opérante de déplacement et durant un certain temps, suffisante pour permettre la séparation axiale des extrémités adjacentes des deux bâtons de matrice consécutifs;
l- détecter une position du premier bâton de matrice espacé axialement du second bâton de matrice, et extraire le premier bâton de matrice couvert de l'appareil de couverture;
m- répéter les phases "j" à "l" pour les bâtons suivants.

34. Procédé, selon la revendication 33, caractérisé en ce que la phase de positionnement du premier bâton de matrice (10) dans la direction longitudinale opérante comprend la phase consistant à déplacer automatiquement, individuellement et séquentiellement, chaque bâton de matrice (10) d'une position extérieure à l'appareil de couverture, à la position à la direction longitudinale opérante de couverture.

35. Procédé, selon la revendication 34, caractérisé en ce que chaque bâton de matrice (10) est séquentiellement et individuellement distribué par gravité jusqu'à la position extérieure à l'appareil de couverture.

36. Procédé, selon la revendication 33, caractérisé en ce que chaque bâton de matrice (10) est déplacé axialement, en appliquant une force axiale sur sa seconde extrémité, jusqu'à ce que sa première extrémité soit complètement couverte, ledit déplacement étant effectué ensuite par l'action d'une traction axiale sur la première extrémité.

37. Procédé, selon la revendication 33, caractérisé en ce que la première accélération axiale est obtenue, en appliquant une force axiale sur la seconde extrémité de chaque bâton de matrice (10), la seconde force axiale étant obtenue en appliquant une traction axiale sur la première extrémité dudit bâton de matrice (10).

38. Procédé, selon la revendication 33, caractérisé en ce que la phase d'extraction de chaque bâton de matrice (10) de l'appareil de couverture comprend la phase consistant à déplacer automatiquement, individuellement et séquentiellement, chaque bâton de matrice (10) d'une position à l'intérieur dudit appareil de couverture, à la direction longitudinale opérante de couverture, à une position extérieure d'extraction de bâton.
